(19) **Europäisches Patentamt / European Patent Office / Office européen des brevets**

(11) **EP 4 303 549 B1**

(12) # EUROPEAN PATENT SPECIFICATION

(45) Date of publication and mention
of the grant of the patent:
**20.11.2024 Bulletin 2024/47**

(21) Application number: **22306014.6**

(22) Date of filing: **07.07.2022**

(51) International Patent Classification (IPC):
**G01K 7/16** (2006.01)     **G01K 3/14** (2006.01)
**G01K 7/42** (2006.01)

(52) Cooperative Patent Classification (CPC):
**G01K 7/16; G01K 3/14; G01K 7/425;**
G01K 2217/00

(54) **PROCESS FOR MONITORING THERMAL RESISTANCES IN A POWER ELECTRONIC SYSTEM**

VERFAHREN ZUR ÜBERWACHUNG VON THERMISCHEN WIDERSTÄNDEN IN EINEM
LEISTUNGSELEKTRONISCHEN SYSTEM

PROCÉDÉ DE SURVEILLANCE DE RÉSISTANCES THERMIQUES DANS UN SYSTÈME
ÉLECTRONIQUE DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.01.2024 Bulletin 2024/02**

(73) Proprietors:
• **Mitsubishi Electric R&D Centre Europe B.V.
1119 NS Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventors:
• **PICHON, Pierre-Yves
35708 RENNES CEDEX 7 (FR)**
• **QUEMENER, Vincent
35708 RENNES CEDEX 7 (FR)**

(74) Representative: **Plasseraud IP
104 Rue de Richelieu
CS92104
75080 Paris Cedex 02 (FR)**

(56) References cited:
**US-A1- 2020 132 557**

• **TIAN BO ET AL: "Monitoring IGBT's health
condition via junction temperature variations",
2014 IEEE APPLIED POWER ELECTRONICS
CONFERENCE AND EXPOSITION - APEC 2014,
IEEE, 16 March 2014 (2014-03-16), pages 2550 -
2555, XP032591068, DOI:
10.1109/APEC.2014.6803662**
• **WANG ZE ET AL: "A Real-Time Adaptive IGBT
Thermal Model Based on an Effective Heat
Propagation Path Concept", IEEE JOURNAL OF
EMERGING AND SELECTED TOPICS IN POWER
ELECTRONICS, IEEE, PISCATAWAY, NJ, USA,
vol. 9, no. 4, 11 February 2020 (2020-02-11), pages
3936 - 3946, XP011867949, ISSN: 2168-6777,
[retrieved on 20210729], DOI:
10.1109/JESTPE.2020.2973181**

# Description

## Field of the invention

The present disclosure concerns the field of power electronic systems having power semiconductors and more precisely power switching semiconductors and concerns a method for monitoring thermal resistance in such a power electronic system.

## Background

In order to achieve higher current density in power modules, as an alternative to increasing the die areas of such modules, the adoption of multi-die power modules architecture is growing, where several semiconductor dies are electrically connected in parallel and perform the same function of a single switch. In the prior art, the power module lifetime is limited by the semiconductor junction temperature swing during the mission profile. Classical wear out mechanisms are generated by the combination of thermal cycles and coefficient of thermal expansion (CTE) mismatches leading to mechanical stresses between the different layers of a power module. These mechanical deformations and the excessive strain applied at the interface of different materials results in the degradation, or even failure, of the power module due to the formation of cracks and/or voids. In addition, the degradation of layers between the semiconductor and the cooling system, such as a heatsink, results in an increased thermal resistance and consequently in an increase of the amplitude of the temperature swing, for a given load condition. The most critical failure mechanisms relate to the electrical interconnection packages closest to the semiconductor die and are the bond wires lift off and die attach degradation in particular with delamination of Sn-based solder or Ag-based sintered layer. Documents discussing such issues are for example:

N. Degrenne, J. Ewanchuk, E. David, R. Boldyrjew and S. Mollov, "A Review of Prognostics and Health Management for Power," Annual Conference of the Prognostics and Health Management Society, (2015) 1-11;
Mauro Ciappa, "Selected failure mechanisms of modern power modules," Microelectronics Reliability, 42 (2002) 653-667;
P-Y. Pichon and J. Brandelero, "Relative importance of solder and wire bond defects on the maxi-mum junction temperature of IGBT devices," Microelectronics Reliability, 126 (2021) 114250.

In this context, there is high technological interest to monitor the health condition of these layers and assess the remaining life of the power module before actual failure of the module occurs. Specifically, on-line condition monitoring of the die attach layer represents a key technology to monitor the degradation level, avoid failures, plan maintenance, and, based on this monitoring, to develop strategies to extend the lifetime of power modules.

Testing methods exist and document CN103175861A discloses a junctionto-case thermal resistance testing method, document CN103792476A concerns a thermal resistance measuring method for semiconductor device, document EP 0 708 327 B1 concerns a method and apparatus for thermal impedance evaluation of packaged semiconductor components, document US 7,356,441 B2 concerns a junction temperature prediction method and apparatus for use in a power conversion module, document CN107219016A provides a method and system to calculate an IGBT module transient state junction temperature.

The thermal impedance is defined as $Zth_{j\text{-ref}}=(T(t)-T_{ref})/Pdiss$; where Pdiss is a change of dissipated power, $T(t)$ the temperature response of the device to this power change, and $T_{ref}$ is a reference temperature, for example a heat sink temperature $T_{HS}$, or a cooling fluid temperature $T_{CF}$, or a cooling means temperature $T_{CM}$. The thermal resistance is defined as $Rth_{j\text{-ref}}=\lim(Zth)\ (t\text{-}>\infty)$.

In the prior art, the degradation level of the packaging layers is measured and monitored using different techniques based on thermal impedance measurements:

- With thermistances, calibrated temperature-sensitive electrical resistors, which are typically built-in in classical power modules, thermally connected to the ceramic isolation plate of the semiconductor dies, and electrically connected to terminals of the power module. These devices allow monitoring the temperature of the ceramic plate during the life of the module. By monitoring the evolution of the temperature at the position of the device it is possible to monitor a change of thermal impedance between the heatsink and the module.
- Using several thermal sensitive electrical parameters (TSEP) to measure the temperature of the semiconductor dies during operation of such semiconductor. TSEP are electrical parameters of the semiconductor that are sensitive to the temperature, can be calibrated, and can thus give information on the temperature of the semiconductors. Thus, the thermal resistance information between a semiconductor and the heatsink can be extracted during the lifetime of the module, provided the power dissipated in the semiconductor Pdiss is known;

- Through thermal impedance measurements techniques which are transient thermal response techniques which can give information on the degradation of the different interfaces of the power module. The technique typically consists in:

First, applying a starting steady-state thermal condition on the power module using the semiconductor switch as an active device. This starting condition can either be a zero-power condition, or a condition where a recorded constant power is dissipated at the semiconductor.

Second, applying a controlled power step increase (in case the start condition is a zero power condition) or a power step decrease (in case the start condition is a constant power condition), recording the power change, and then recording the evolution of the semiconductor temperature until the new steady state thermal condition is reached.

Finally, describing the recorded temperature transient behavior described by using an equivalent Foster or Cauer network which represent the thermal structure of the power module with several RC elements. A fitting of the temperature transient using the foster equation allow to extract the resistance and capacitance of the different part of the power module, giving information of the evolution of thermal resistance and capacitance.

These techniques are particularly sensitive of solder attach and degradation of the different layer constituting the power module. Typically, the thermal impedance measurement is mainly measured in offline condition by mounting the device in a measurement test bench and by controlling the load, measuring the dissipated power in the device, and measuring the temperature transient with a dedicated sensor.

Several experiments have been reported in the literature and have demonstrated a clear correlation of the degradation of solder layer by an evolution of the thermal transient behavior after power cycling the power module.

The available transient thermal techniques (such as thermal impedance, ZTH) are difficult to implement in an on-line operation of the power module, as it remains difficult to measure the cooling/heating transient temperature during the operation of the power device, with a sufficient high rate of data acquisition and the dissipated power of each device must be controlled and known in order to measure the thermal impedance and remains difficult to measure it, in particular in the case of multichip power module where the current is shared between different parallelly interconnected dies.

Available online TSEP monitoring techniques allow real-time monitoring the temperature of the semiconductor dies, and possibly detect increase in the thermal resistance between the semiconductor and the heatsink $Rth_{j-HS}$, provided similar power dissipation conditions can be reproduced during the measurements. However, the knowledge of $Rth_{j-HS}$ does not allow to discriminate which layer or interface has the most degraded in the package stack.

Thermistances are typically thermally connected to intermediate layers of the power module package stack, typically to the ceramic isolation plate, and the monitoring of its evolution, together with the evolution of a semiconductor die thermally connected to the same ceramic isolation plate, i.e. a DBC direct bonded copper ceramic substrate corresponding to the direct mating of copper and ceramic, enables in principle to discriminate whether the thermal resistance of the bond $Rth_{j-DBC}$, or the thermal resistance between the bond and heatsink $Rth_{DBC-HS}$ has degraded most. However, integrating thermistances represents an additional production cost, need additional external leads, additional ceramic isolation plate area, and thus generally increases the cost, volume, and weight of the power module. Therefore, typically only one thermistance is integrated on power modules, and thus the temperature measured by it is representative only of the temperature of the closest semiconductor chip. B. Tian et al., "Monitoring IGBT's Health Condition via Junction Temperature Variations", 2014 IEEE APPLIED POWER ELECTRONICS CONFERENCE AND EXPOSITION, p. 2550-2555, 16-03-2014, DOI: 10.1109/APEC.2014.6803662 discloses determining the temperature of a transistor junction by using a collector-emitter saturation voltage as a TSEP.

## Summary of the invention

In view of this prior art, the present disclosure proposes to use individual control of semiconductor switches in power modules to provide open state configurations of such switches where a TSEP measurement is done in order to obtain a temperature measurement. This is done for a module with one or more semiconductor switches and each die in a multichip power module in order to detect a degraded layer part of the power module. This will allow to determine which part of the equipment using such modules is in a degraded state in order to manage a better maintenance planning.

More precisely, the present disclosure concerns a method for measuring temperatures or thermal resistances in a power electronic system comprising at least a first power unit and a heat source thermally connected through a connection layer to a cooling means, comprising, while said first power unit is in an open state such as it does not dissipate heat, providing a limited current in said first power unit said limited current being unable to turn said first power unit in a power conducting state, measuring a temperature T1 of said first power unit using a thermal sensitive electrical parameter TSEP of said first power unit, calculating a temperature $T_{CL}$ of the connection layer as being equal to such first temperature T1 since said first power unit in an open state does not generate heat.

This method allows to simply get a measurement of the connection layer temperature without the need of a thermistance.

The heat source may be a second power unit or any heating element.

The method may comprise further measuring a temperature $T_{CM}$ of cooling means of the power unit and calculating the difference of temperature $T1-T_{CM}$ between said connection layer and said cooling means.

This permits to obtain information on the thermal resistance between the connection layer and the cooling means.

When the heat source is a second power unit, the method may comprise further:

- measuring a temperature T2 of said second power unit using a TSEP of said second power unit,
- comparing the difference $T1-T_{CM}$ with the difference $T2-T_{CM}$
- comparing the thermal resistance $R_{2-CL}$ between the second power unit and the connection layer to the thermal resistance $R_{CL-CM}$ between the connection layer and the cooling means through the calculations:

$$R_{2\text{-}CL} / R_{CL\text{-}CM} = (T_{CL} - T_{CM}) / (T2 - T_{CL}) = (T1 - T_{CM}) / (T2 - T1)$$

since $T1 = T_{CL}$ such calculation being independent of Q, where Q is the heat flow value applied between said second power unit and said connection layer.

This gives the information of thermal resistance of layers without the need of sensors except a sensor on the cooling means.

Said first power unit and said second power units may be semiconductor switches thermally connected to said connection layer through a first stack of material layers, and said cooling means may be a heatsink, wherein said connection layer is thermally connected to said heatsink through a second stack of material layers.

Said first power unit and said second power units may be semiconductor switches, said connection layer being a ceramic layer such as a direct bonded copper ceramic layer or an active metal brazed layer attached directly to said heatsink or attached to said heatsink through a baseplate BP.

Said first power unit may be a first half bridge power unit comprising a first top switch and a first bottom switch, said first top switch and said first bottom switch having dies attached to a first ceramic layer such as a direct bonded copper ceramic layer or an active metal brazed layer through a first die attach layer and said second electronic unit is a second half bridge power unit comprising a second top switch and a second bottom switch, said top switch and bottom switch having dies attached to a second direct bonded copper ceramic layer through a second die attach layer and wherein said first direct bonded copper ceramic layer and second direct bonded copper ceramic layer are attached to a common heatsink through a solder layer and a baseplate layer, said method comprising turning off both the first top switch and the first bottom switch of the first half bridge power unit while the second top switch and the second bottom switch of the second half bridge power unit are active and

- measuring a temperature T2 of the second top switch through TSEP of said second top switch, measuring a temperature T1 of the first top switch or the first bottom switch through TSEP of said first top switch or said first bottom switch by providing a limited current in said first top switch or said first bottom switch, said limited current being unable to turn said first top switch unit in a power conducting state, considering the temperature of the baseplate as equal to said temperature T1 calculating the temperature difference between said second top switch and the baseplate $R_{2-BP} = T2 - T_{BP} = T2 - T1$
- measuring a temperature of the heatsink $T_{HS}$ and then calculating a ratio $r2 = (T2 - T_{BP})/(T_{BP} - T_{HS})$ to compare the thermal resistance of the second die attach layer, the second DBC layer, the solder layer with that between the baseplate and the heat sink.

Each power unit may be turned off in sequence while the other power unit is active to complete the measurements on all power units.

The power electronic system may comprise more than one half bridge power units and one of said half bridges may be turned off to provide a temperature measurement of the baseplate while measurements of thermal resistance and thermal resistance ratios are conducted on the others of said half bridges, each of said half bridges being turned off in sequence while the others are active to provide a complete testing of the half bridges of the power electronic system.

The power electronic system may comprise a first power module having a first pair of half bridges each having a top switch an a bottom switch and a DBC layer connected to a first baseplate and comprises a second power module having a second pair of half bridges each having a top switch an a bottom switch and a DBC layer connected to a second baseplate, said first baseplate and said second baseplate being attached through a thermal contact material to a heatsink in contact with a cooling fluid, the power electronic system comprising further gate driver circuitries independent for each of said switches, said method comprising measuring the thermal resistance $R_{PU1-HS}$ between a top switch or a bottom switch of a first power module and the heatsink and the thermal resistance $R_{HS-CF}$ between the heatsink and the cooling fluid and comparing said thermal resistances through the steps of:

- maintaining all the devices of a second power module open and measuring the temperature $T_{HS}$ of the heatsink contact surface using a TSEP temperature measurements of one or a combination of the switches of said second power module, while the switching functions of the power electronic system are carried out by the switches of the first power module, and at the same time measuring the temperatures T2 of at least one of the devices of said first power module through its TSEP, measuring a temperature $T_{CF}$ of the cooling fluid, and,

- calculating a ratio r3= (T2-$T_{HS}$)/($T_{HS}$-$T_{CF}$) to compare the thermal resistance of the first power module, first baseplate, first thermal contact material with the thermal resistance between the heat sink contact surface and the cooling fluid, said method comprising further carrying the same steps with the switches of the first power module open while the switching functions of the power electronic system are carried out by the switches of the second power module.

Combining the methods at the switch level, the power unit level and the module level permits to obtain measures of the thermal resistance ratio at several levels in a stack of modules on a heatsink and cooling fluid.

Said first power unit may be forced in said open state during the measurements of temperature or thermal resistances.

This permits to schedule the measurement sequences.

The disclosure concerns also a method for monitoring the thermal resistance of power units of a power electronic system comprising acquiring initial thermal resistances of such power units through the methods disclosed, storing said initial thermal resistances and a ratio between an initial thermal resistance between said power units and the connection layer of such power units to the thermal resistance between the connection layer and the cooling means, repeating said method during the life of the power electronic system to acquire further thermal resistances and further ratios, comparing said further thermal resistances and said further ratios to said initial thermal resistances and said initial ratios to detect a modification of thermal resistances and ratios.

The method for monitoring may comprise comparing a modification of said thermal resistance to a predefined threshold value and raising a warning in case of a value of said thermal resistances or said ratios above said threshold value.

The method may comprise:

- periodically recording at a time interval $t_{sampling}$ the temperatures Tj of at least one semiconductor device j of the power electronic system such as a power converter and storing the data in a memory
- periodically calculating a mean temperature $T_{mean,j}$ and a standard deviation $\sigma_{mean,j}$ of at least the semiconductor j at a time interval $t_{eval}$ using a data sample Tnj,.....,Tmj, such as an integration time $t_{averaging}$ is at least a significant portion of the thermal constant of the power converter.
- at least if the conditions $T_{mean,j}$> C1×$T_{HS}$, and $\sigma_{mean,j}$ < C2×($T_{mean,j}$-$T_{HS}$) are respected, doing the measurement process where C1 is a constant larger than 1 and C2 a constant smaller than 1.

C1 may be in a range between 1.1 to 5.

C2 being a constant that is between 0.2 to 0.05, the condition amean,j < C2*(Tmean,j-$T_{HS}$) being the condition detecting the steady state nature of the operation, by comparing the standard deviation of the temperature samples with the average temperature difference between the semiconductor and the heat sink during the sampling time.

The time interval $t_{sampling}$ may be a multiple of the inverse of the switching frequency of a power converter: $t_{sampling}$= n/ $f_{PWM}$.

The temperature $T_{mean,j}$ may be calculated using the arithmetic mean, or the median of the data sample Tnj...Tjm.

The integration time $t_{averaging}$ may be greater than a thermal constant of the power electronic system.

The time interval $t_{eval}$ may be a time interval larger than $t_{averaging}$.

The switches of powers units PUx, x=1 to n, where n is the total number of switches, may be controlled independently from each other and the method may comprise measuring the coupling impedance between a power unit PUi and a power unit PUj i≠j, by a sequence comprising:

- 1/ switching off all switches of power units PUj, and maintaining the switches of power units PUi active,
- 2/ measuring the temperature Tx of all power units PUx ,
- 3/ measuring the temperature of the heatsink $T_{HS}$,
- 4/ calculating the temperature differences ΔTx=Tx-$T_{HS}$,
- 5/ comparing the ΔTi with ΔTx such as to detect a change in a coupling thermal resistance.

Said sequence may be repeated several times during the life of the product.

The method may comprise measuring the power dissipated in a power unit PUi using an electrical model Pi(IL,Vbus,fPWM, Ti , α...) of such power unit, where IL is the measured load power, Ti is the measured temperature of the power unit PUi, Vbus is the known or measured bus voltage of the power unit PUi, fPWM is the switching frequency of such power unit, and α is the duty cycle of such power unit, and calculating coupling resistances as ΔTx/Pi

The present disclosure concerns also a software comprising instructions for implementing the method when executed in a controller of said power system and a computer readable non-volatile medium on which the software is recorded.

**Brief description of the drawings**

A detailed description of exemplary embodiments of the invention will be discussed hereunder in reference to the attached drawings where:

Figure 1: Shows a schematic view of an embodiment of a power electronic system with a power unit, having one semiconductor die, adapted to the process of the present disclosure;
Figure 2: Shows a schematic view of an embodiment of a power electronic system with one power unit, with two semiconductor dies, adapted to the process of the present disclosure;
Figure 3: Shows a schematic view of an embodiment of a power electronic system with two power units, each unit having one pairs of semiconductor switch dies on a single DBC substrate, adapted to the process of the present disclosure;
Figure 4: Shows the electrical circuit of the power electronic system of figure 3;
Figure 5: Shows a schematic view of an embodiment of a power electronic system with three power units, each having one pairs of semiconductor switch dies on a single DBC substrate, adapted to the process of the present disclosure;
Figure 6: Shows the electrical circuit of the power electronic system of figure 5;
Figure 7: Shows a schematic view of an embodiment of a power electronic system with two power units each having four semiconductor dies adapted to the process of the present disclosure;
Figure 8: Shows the electrical circuit of the power electronic system of figure 7;
Figures 9A, 9B, 9C, 9D: show flowcharts of examples of method steps embodiments;
Figure 10: shows an exemplary general flowchart.

**Detailed description of embodiments of the invention**

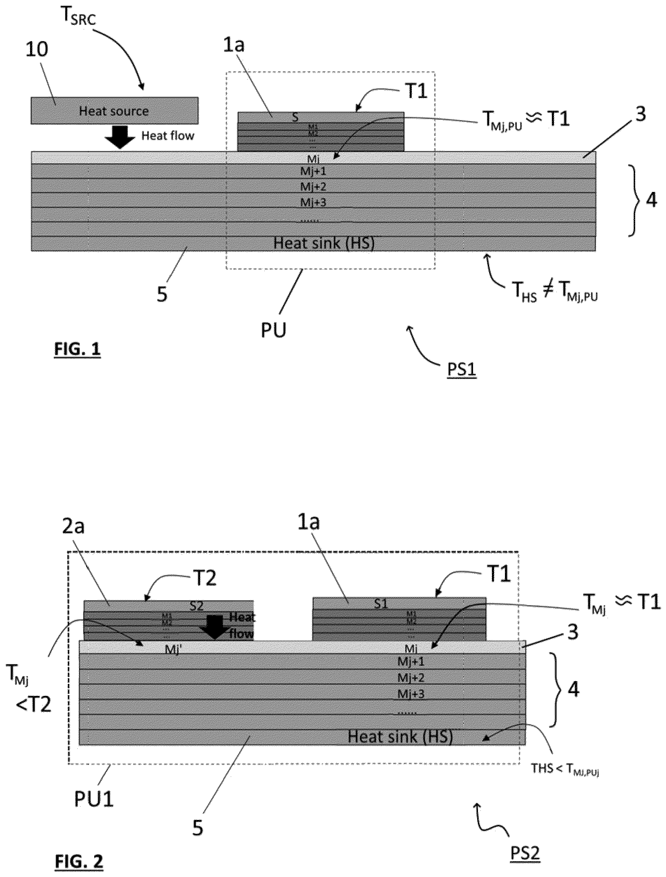

The method for measuring temperatures in a power electronic system of the present disclosure permits several measurements depending on the type of system. In figure 1 a power unit PU comprises a semiconductor switch having a die 1a connected to a heatsink HS, 5 via a stack of m material layers Mi, i=1,2...m. In this stack, layers M1 to Mj-1 are located between the die 1a and layer Mj which could be a DBC layer. The semiconductor switch is thermally connected in parallel with a heat source 10 at a temperature $T_{SRC}$ via such layer Mj 3 forming a connection layer Mj of the material layers Mi of the stack.

Under Layer Mj is a further stack 4 of layers Mj+1 to Mm, layer Mm being connected to a heatsink HS 5.

The method comprises providing a limited current in said at least one semiconductor switch 1a in said open state, said limited current being adapted for measuring a first temperature T1 of said at least one semiconductor switch using a thermal sensitive parameter (TSEP) of said at least one semiconductor switch in said open state.

In such situation, the temperature of the semiconductor switch that does not dissipate heat is close or equal to the temperature of the DBC layer Mj 3. It is then possible to calculate the temperature $T_{Mj}$ of the connection layer Mj as being equal to said first temperature T1 obtained through the TSEP measurement.

The TSEP measurement may use parameters such as gate resistance or other parameter which may be measured using existing electrical measurement features of the power unit.

Traditional semiconductor switches usually are blocked with a $V_{GE}$ voltage of around -8V and conducting with a $V_{GE}$ voltage around +15V and may drive currents of tens or hundreds of Amps.

In the present case the measurement of T1 through a TSEP parameter is done with an injection of a small current, e.g., pulses of tens of milliamperes e.g. 25 mA in the gate-emitter junction, for a duration of less than tens microseconds with a current source, allows to measure of the gate/emitter resistance of the semiconductor. With such a small current injection the VGE voltage of such semiconductor does not rise sufficiently to enable conduction of the switch.

Using the measurement of the internal gate resistance Rg1 of at least one semiconductor of the switch of PU1 permits to avoid any additional external sensor for measuring the junction temperature T1. Consequently, the temperature of the layer Mj can be determined using only the control terminals of the power electronic system PS.

The temperature T1 of S1 is measured using the gate resistance Rg1 of S1 using a calibration curve. For example, the calibration curve relates T1 and the gate resistance of switch S1 as:

$$T1 = \delta R1 * Rg1 + R01$$

The semiconductor switches may be semiconductors switch such as silicon, silicon carbide, or GaAs semiconductors, in a silicon insulated gate bipolar transistor (IGBT) or a MOSFET configuration.

The general principle of the disclosure is that, because the switch of the power unit PU is purposely maintained open, and its temperature can be measured, it can advantageously be used as a temperature sensor to measure the temperature of the layer Mj. Thus, the semiconductor switch serves the additional function of a temperature sensor of the layer Mj.

In the case of figure 1, the heat source 10 may be any system that generate heat losses and that has a thermal connection to layer Mj, such as the temperature of Mj is different from that of the heatsink, even if the power unit PU does not generate losses. For example, the heat source may be a resistance submitted to an electrical current flow, a mechanical system that generate losses via friction, an inductance submitted to a magnetic flux, a thermal radiation source that changes the temperature of Mj, or any source that has a radiative, convective, inductive, conductive thermal connection to layer Mj.

In order to permit such measurement, the method may comprise maintaining said semiconductor switch 1a in an open state such as it does not dissipate heat or detecting that such semiconductor switch is in said open state.

In one example, the power unit may be thermally connected to a motor body, does not transfer energy, and is used to monitor the temperature of the motor body.

By doing measurements when the switch is open, the main electrical function of the semiconductor switch is not affected because the switch is not active and does not transfer energy. The additional function of temperature measurement is only done when the switch does not supply power.

The method of the present disclosure is adapted to power modules where the material structure above the semiconductor die 1a does not dissipate significant heat, compared to the stack of layers between the semiconductor switch die and the connection layer Mj 3. Therefore, advantageously, even if the thermal contact between the semiconductor switch die 1a and layer Mj is poor (for example, because the thermal contact is degraded), the temperature $T_{Mj}$ of the material Mj at the position under such die 1a is close enough to that of the semiconductor die 1a, so that it can be approximated that these temperatures are the same. For example, the thermal resistance between the top of the semiconductor die 1a and the heatsink is more than a factor 5 of that between the semiconductor die 1a and Mj, usually more than a factor 10 and often more than a factor 20. In example, only a small surface area of the top surface of the semiconductor die 1a is connected to the heatsink via a metal, for example this contact area is less than 10%, or less than 5%, and this area is minimized such as to only provide, for example sufficient electrical connection of the top surface, such as, for example wire connections to the terminals. In another example, most of the top surface area of the semiconductor die 1 a usually 90% to 95% is covered by a thermally insulating material, e.g., an epoxy based potting compound of a silicone gel compound with a thermal conductivity of less than 2W/(m.K) [most thermally conductive epoxies have a thermal conductivity in the range 1-1.6 W/(m.K)], or preferably less than 1W/(m.K) which provides a very limited loss with respect to the transfer of heat between the die and layer Mj.

In such case, the semiconductor switch may be used as a temperature sensor for said heat source 10 assuming that the heat source having a temperature $T_{SRC}$ is in contact with layer Mj:

$$T1 = T_{Mj} = T_{src} \text{ or close to } T_{src}.$$

In figure 2, the power electronic system is a power unit PU1 comprising two semiconductor switches each having a die 1a, 2a connected to a heatsink HS 5 via a similar stack of m material layers Mi, i=1,2...m. The two semiconductor switches are thermally connected in parallel via the connection layer Mj 3 of the stack.

In such case, each of the two semiconductor switches may form said heat source and may be used alternately to measure the temperature using the method herein disclosed.

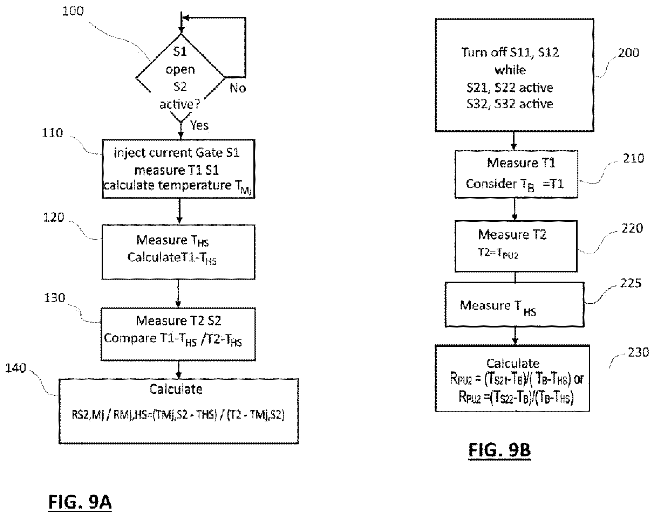

In such a situation, the method as depicted in figure 9A comprises:

- maintaining a first of said two semiconductor switches, e.g., switch S1 on die 1a, in an open state, such as it does not dissipate heat, or detecting that a first of said two semiconductor switches is in said open state while at least a second switch S2 on die 2a is in a conductive state to form said heat source 100, and then, injecting a gate current in the gate of semiconductor S1 and measuring a first temperature T1 of die 1a of the first switch S1 using a thermal sensitive parameter of said first semiconductor switch 110,
- calculating the temperature $T_{CL}$ of the connection layer as being equal to such first temperature T1 since said first switch S1 does not generate heat.

- measuring a temperature $T_{HS}$ of the heatsink of the power electronic system at step 120,
- comparing the difference $T1-T_{HS}$ with the difference $T2-T_{HS}$,

  In such condition, the method may comprise measuring a temperature T2 of die 2a of the second switch S2 in a conductive state, such measurement being done preferably also using a TSEP parameter of said second switch S2, 130,
- comparing the thermal resistance $R_{S2,Mj}$ between the die of the second S2 of said at least two semiconductor switches and the layer Mj to the thermal resistance $R_{Mj,HS}$ between Mj and the heatsink through the calculations at step 140:

$$R_{S2,Mj}=Q/(T2 - T_{Mj,S2})$$

$$R_{Mj,HS}= Q/(T_{Mj,S2} -T_{HS})$$

$R_{S2,Mj} / R_{Mj,HS}=(T_{Mj,S2} - T_{HS}) / (T2 - T_{Mj,S2})$ which becomes independent of Q where Q is the heat flow value applied between said second of said at least two semiconductors and said connection layer Mj.

This measurement benefits from the following:

The semiconductor S1 is positioned on the layer Mj such as it measures a temperature $T_{Mj}$ of Mj close to the temperature $T_{Mj'}$ at the position under the semiconductor S2: $T_{Mj',S2} \approx T_{Mj},S1$. For example, the thermal impedance between the point of Mj' under the semiconductor S2 and the point of Mj under the semiconductor S1 is a small fraction of the thermal impedance between Mj and the heat sink HS, for example <20%, and usually <10%.

When the temperature $T_{Mj}$ under semiconductor S1 is close enough to the temperature of the semiconductor S1, it can be approximated that these temperatures are the same: $T_{Mj} =T1$.

In this example, $T_{Mj} = T_{Mj'} = T1$. The semiconductor S1 is used as a sensor to measure the temperature of Mj at the position under the semiconductor S1, and it can be approximated that the temperatures of Mj' under the semiconductor S2 and the temperature of the semiconductor of S1 are the same.

Under these conditions, it follows that the ratio of thermal resistance between the semiconductor of S2 and layer Mj, with that of the layer Mj and the heat sink HS can be expressed as:

$$r=R_{S2-Mj}/ R_{Mj-HS}=(T1- T_{HS})/ (T2- T1).$$

Therefore, advantageously, without additional temperature sensors than the temperature measurement of the semiconductors S1 and S2, and the temperature measurement of HS, information can be gained on the relative thermal resistance $R_{S2,Mj}$ and $R_{Mj-HS}$. By reversing the measurements that is by keeping S2 open, it can be measured the relative thermal resistance $R_{S1,Mj} / R_{Mj-HS}$.

With the disclosed method the thermal resistance $R_{S2,Mj}$ between the die of the second semiconductor S2 and layer Mj can be compared to the resistance $R_{Mj,HS}$ between Mj and the heat sink, without needing to know the dissipated power in such semiconductor.

In consequence the method permits to:

monitor a change of thermal resistance $R_{S2,Mj}$ during the life of the power electronic system PS, assuming the thermal resistance $R_{Mj,HS}$ does not change, OR
monitor a change of thermal resistance $R_{Mj,HS}$ during the life of the power electronic system PS, assuming the thermal resistance $R_{S2-Mj}$ does not change.

The measurement of the temperatures T1, T2, and $T_{HS}$ are preferably acquired in steady-state thermal conditions or close to steady state thermal conditions and the measurements are repeated alternating switches S1 and S2 to monitor the possible degradation of one of the resistances of the intermediate layers between S1 and Mj or between S2 and Mj.

As said above, a similar measurement process may be done when the switch S2 is in open state and the switch S1 is conducting to obtain a comparison of the thermal resistance $R_{S1,Mj}$ between the die of the first semiconductor S1 and layer Mj and the resistance $R_{Mj,HS}$ between Mj and the heat sink to obtain thermal data on the complete unit.

Here both the temperatures T1 and T2 of switches S1 and S2 are measured using the gate resistance of S1 and S2 using respective calibration curves. For example, the calibration curves relate T1, respectively T2 and Rg1, respectively Rg2 linearly as:

$$T1 = \delta R1 * Rg1 + R01$$

$$T2 = \delta R2 * Rg2 + R02$$

Two situations allow the use of the method. In a first type of circuit, the semiconductors having dies 1 a, 2a are not connected electrically in parallel, have separated gate commands and do not perform the function of a single switch. In such case where each switch possesses its gate driver, the method is implemented when one of the switches is in an open state during operation of the module. In a second type of circuits, the two semiconductor switches are connected in parallel but driven by separate gate drivers commands and in such case one of the switches is kept in an open state while the other is conducting for a period sufficient to implement the method. This can be done periodically for a limited time such as a hundred of milliseconds to one second in order to provide thermal data on the module. This method needs that the gate commands of the switches are separated or comprise a different control line.

It is straightforward to expert in the field of power electronic modules design that the conditions in the examples presented here are generally satisfied. For example, in such modules, the layer Mj is a Direct Bonded Copper (DBC) ceramic substrate made mainly of an alumina (Al2O3) substrate of several mm thick of thermal conductivity between 20 and 30 W/(m.K), and the semiconductor chips of S1 and S2 are spaced less than 5 mm apart, such as $TMj,S2 \approx TMj,S1$. In addition, the power electronic module has for encapsulating compound materials of low thermal conductivity.

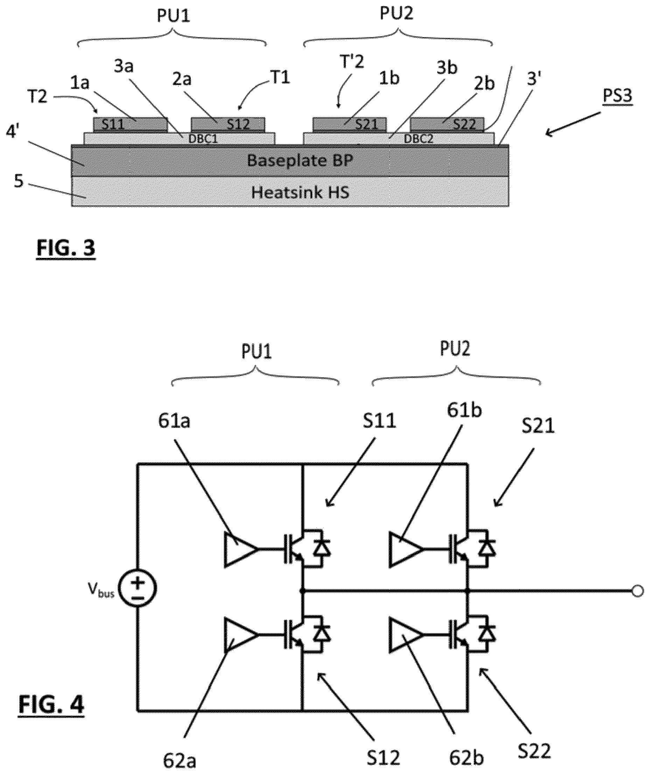

In figures 3 and 4, a first power unit PU1 comprises two semiconductor switches S11, S12 each having a freewheeling diode and driven by a gate driver 61a, 62a where switch S11 is a top switch of a half-bridge and switch S12 is the bottom switch of such half-bridge. Such switches are made of dies 1a, 2a bonded to a single ceramic substrate 3a and a second power unit PU2 comprises two semiconductor switches S21, S22 each having a freewheeling diode and driven by a gate driver 61b, 62b where switch S21 is a top switch of a half-bridge and switch S22 is the bottom switch of such half-bridge. Such switches are made with dies 1b, 2b bonded to a single ceramic substrate 3b.

Each of said power units are connected to a single heatsink 5 through a layer 3' and one or more sub layers 4' forming a baseplate.

In such designs, the direct bonded copper ceramic layers 3a, 3b are often the most critical layers and can limit the lifetime of the power module, it is of interest to measure the temperature of such DBC layers. In order to get information of the die attach thermal resistance degradation and the method, similar to the method of figure 9A, comprises the steps:
A - Maintaining open one neighbor semiconductor sharing the same DBC layer of a die of interest where the thermal resistance or the damage indicator is to be evaluated using its gate driver. Since this open semiconductor is electrically connected in parallel with another die as shown in figure 4, the power converter can still perform its task, albeit with a reduced maximum current rating.

As an example, the semiconductor switch S11 is maintained open during the TSEP measurement to avoid dissipating heat. In example, if the semiconductor S11 may be a silicon-based IGBT having its gate voltage maintained at -8V while the other semiconductors electrically connected in parallel with S11 is electrically active and perform the normal operation of the switch.

B - Measuring the temperature $T_{die}$ of the die of interest, the temperature $T_{DBC}$ of the DBC layer using the deactivated neighbor die, and the temperature of the heatsink $T_{HS}$.

In example, keeping the switch S11 on die 1a open permits to carry measurements on die 2a sharing DBC layer Mj1 with die 1a while the converter will still have switch S21 on die 1b to carry current.

Repeating such steps at regular time intervals during the lifetime of the product, and by calculating the ratio $r1 = (T_{die} - T_{DBC})/(T_{DBC} - T_{HS})$ between the difference of temperature between thee die of interest and the DBC layer $T_{die} - T_{DBC}$, and the difference of temperature between the DBC layer and the heat sink $T_{DBC} - T_{HS}$, it is possible to monitor a change of thermal resistance of the die attach layer. In example, in the case of weak thermal coupling between parallel dies, and referring to the previous example, in the case of negligible thermal coupling between parallel dies S11 and S21, an increase of this ratio means that the thermal resistance of the die attach layer increases in the same proportion.

Using this method, it can be demonstrated that within reasonable approximations, and under steady state thermal conditions, usually after a few seconds of operation at a stabilized power, the ratio r1 above corresponds to the ratio between the thermal resistances between the die and the DBC layer $R_{die,DBC}$ and the thermal resistance between the DBC layer and the heat sink $R_{DBC,HS}$.

Thus, it is preferable to apply this method during a steady state thermal event of the power converter, the steady state operation being either purposely generated during a diagnostic procedure of the power converter or being detected during operation of the converter.

However, it is still possible to use the method to generate a damage indicator in a thermal transient situation as the ratio $r1 = (T_{die} - T_{DBC})/(T_{DBC} - T_{HS})$ may still, under some circumstances, be independent of the dissipated power, and thus the method is not restricted to the steady state thermal case. The ratio r1 cannot then be interpreted as a thermal resistance ratio but as a damage indicator, which trend can still be monitored to evaluate the health state of the power module.

For example, step B may be executed less than 100ms after step A, this sequence is repeated at regular time intervals during the lifetime of the product, and the ratio r1 = $(T_{die}-T_{DBC})/(T_{DBC}-T_{HS})$ between the difference of temperature between the die of interest and the DBC layer $T_{die}-T_{DBC}$, and the difference of temperature between the DBC layer and the heat sink $T_{DBC}-T_{HS}$, is calculated, and it is possible to monitor a change of the damage parameter R of the die attach layer.

Here again, the method starts from a measurement of a temperature of a switch, that is maintained open, through a TSEP method, measuring a temperature $T_{HS}$ of a heatsink and calculating the difference of temperature T1-$T_{HS}$ between said first temperature T1 and said heatsink temperature $T_{HS}$ to obtain a value of thermal resistance between said semiconductor switch in off condition and said heatsink.

With the same principle keeping any of the switches open while another switch of the same die is in function, measurements can be done for all the dies and layers under such dies.

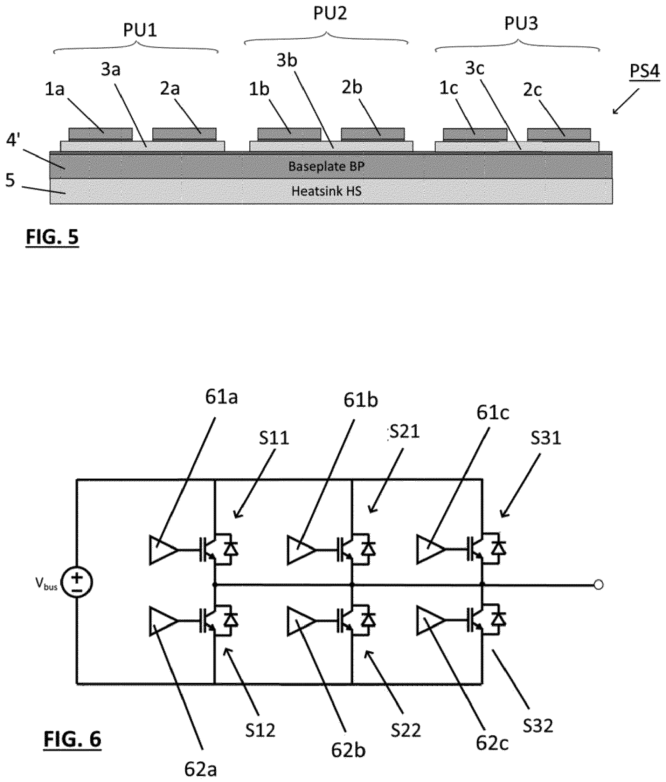

Figures 5 and 6 shows an embodiment where three half bridges are connected in parallel to an output terminal.

The power electronic system comprises three top switches S11, S21, S31 which are located respectively on dies 1a, 1b, 1c and three bottom switches S12, S22, S32 located on dies 2a, 2b, 2c respectively.

Each top and bottom switches has its own gate driver circuitry 61a for switch S11, 61b for switch S21, 61c for switch S31, 62a for switch S12, 62b for switch S22 and 62c for switch S32. The three half bridges 1a, 2a; 1b, 2b and 1c, 2c have their own DBC layers 3a, 3b, 3c attached to a common baseplate 4' which is in turn attached to heatsink 5.

This embodiment corresponding to figure 9B is used to disclose another measurement to obtain thermal resistance between the dies and the baseplate.

When S11 and S12 of a first power unit PU1 are kept open in step 200, the thermal resistance between switch S11 and the baseplate may be compared to the thermal resistance between the baseplate 4' and the heatsink 5, by maintaining top switch S11 and bottom switch S12 of a half-bridge open and measuring the temperature $T_B$ of the baseplate using the temperature measurements of switch S11 and switch S12 which provide a temperature $T_{S11}=T_{S12}$ equivalent to $T_B$ in step 210 since these switches are off, the switching functions being carried out by top switches S21, S31 only in one hand, and by bottom switches S22, S32 only in the other hand, and at the same time measuring the temperatures of at least the top switch S21 (measure of $T2=T_{PU2}$ in step 220), and measure of the temperature of the heatsink in step 225, and then by calculating the thermal resistance of a second power unit in step 230: $R_{PU2} = (T_{S21}-T_B)/(T_B-T_{HS})$ or $R_{PU2} =(T_{S22}-T_B)/(T_B-T_{HS})$ to compare the thermal resistance between the dies and the baseplate with the thermal resistance between the baseplate and the heatsink. The same measurements done on the other switches allow to obtain a complete knowledge of all ratios between the die attach layers 3a, 3b, 3c and the baseplate and between the baseplate and the heatsink. In this configuration where three half bridges are present, the maximum current capacity of the converter is approximately reduced by a factor 1/3.

Such measurement may be done on the design of figures 3 and 4 having two half bridges, however, the current capability of the unit in such case is reduced by 50% which may limit the conditions of operations of the unit under measurement.

In order to characterize degradations of the units, the method comprises storing for each switch an initial ratio between first thermal resistance between the die of the switch and the common layer with other switches and second thermal resistance between said common layer and the common heatsink with the method disclosed and repeating said method during the life of said power electronic system to store further ratio between first thermal resistance and second thermal resistance and:

- monitoring a change of said second thermal resistances during life of the power electronic system, assuming the first thermal resistance does not change, or
- monitoring a change of said first thermal resistance during life of the power electronic system, assuming the second thermal resistance does not change.

In the present disclosure the temperature $T_{HS}$ of the heatsink is acquired using one or several state-of-the-art temperature sensors such as a thermocouple, a thermistance, or an infrared detector.

According to the disclosure the thermal resistance between all switches Sx (x=1 to n) and the connecting layer such as a DBC layer Mj connecting thermally them to the heatsink of a module may be measured or at least evaluated together with the resistance between such connecting layer and the heatsink in initial conditions and during the life of the module to monitor evolution of such thermal resistance and ageing of the device. When a baseplate is present to receive several connecting or DBC layer, the resistance between the switches ant the baseplate may also be monitored.

The different measuring methods and steps may be realized through a software implemented in a processor of a controller of said power electronic system, said processor being further configured to provide commands to said power unit or power units to put said at least one semiconductor switch in said open state and configured to provide commands to generate said limited current in said at least one semiconductor switch in said open state.

Such software may be incorporated in a computer readable non-volatile medium such as a ROM or other medium.

One of the technological uses of this method in which a semiconductor switch is temporarily deactivated, is to monitor the temperature of a layer of interest Mj in a power electronic system made of one more power units or modules. The thermal resistance of a particular layer of the power module can be estimated by comparing a temperature difference between the semiconductor die and the layer of interest Mj, with a temperature difference between the layer Mj and the heatsink. This measurement can be performed online during the nominal operation of a power electronic module when each gate of parallel dies is individually controlled by its own gate driver (multichip configuration). Regularly repeating such measurement during life of the power module allows to monitor a localized degradation state of the power module. This will allow to perform a better knowledge of the degradation state of such module and therefore manage a better maintenance planning. Additionally, application of this invention removes the need of integrating thermistances in the power module, as the semiconductor die itself can perform the task when applying the method of the invention. Finally, this invention also does not require a knowledge or measurement of the power dissipated by the semiconductor die, which is a strong limitation in other thermal impedance approaches.

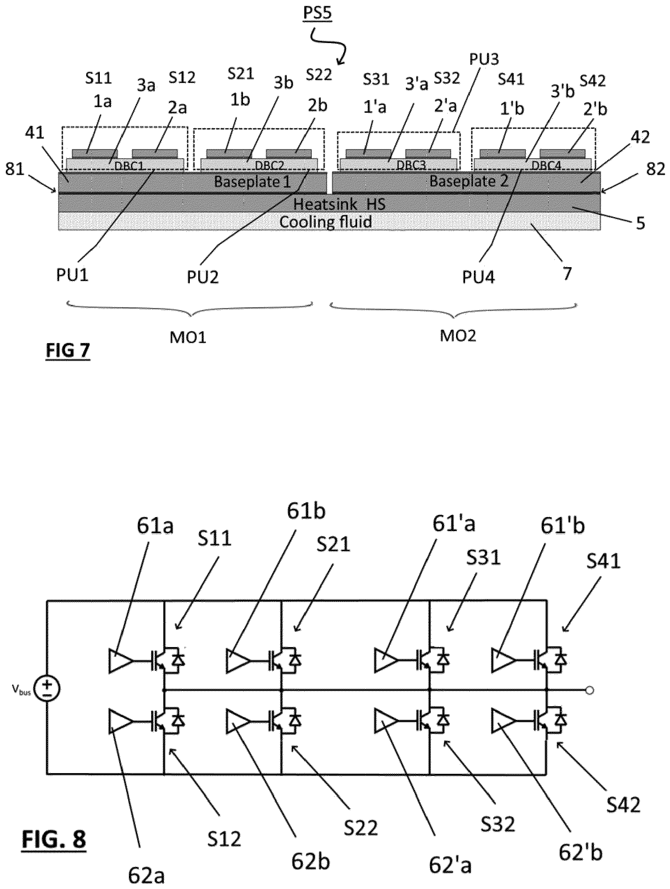

A further type of measurements may be done on a power electronic system PS5 as described in figures 7 and 8.

In this design, four power units PU1, PU2, PU3, PU4 comprising top switch S11 on die 1a, top switch S21 on die 1b, top switch S31 on die 1c, top switch S41 on die 1d and a bottom switch S12 on die 2a, bottom switch S22 on die 2b, bottom switch S32 on die 2c, bottom switch S42 on die 2d and where the top switches are connected in parallel, and the bottom switches are connected in parallel.

The top and bottom switch dies of each power unit are attached to a common DBC layer 3a, 3b, 3'a, 3'b and two power units PU1, PU2 are regrouped in a first power module MO1 on a first baseplate 41 while the two other power units PU3, PU4 are regrouped in a second power module MO2 on a second baseplate 42. The baseplates 41, 42 are in turn attached to a heatsink 5 through a connecting layer 81, 82 such as thermal paste. The heatsink is in contact with a cooling fluid 7.

In figure 8, gate driver circuitries 61a, 62a, 61b, 62b, 61'a, 62'a, 61'b, 62'b independent for each device are represented.

In this configuration, the thermal resistance $R_{PU1\text{-}HS}$ between S21, and/or S11, and/or S22 or S12 and the heatsink 5 may be compared to the thermal resistance $R_{HS\text{-}CF}$ between the heatsink 5 and the cooling fluid 7, by maintaining all the devices of the power module MO2 comprising PU3 and PU4 open and measuring the temperature $T_{HS}$ of the heatsink contact surface using the temperature measurements of one or a combination of the devices of the power module MO2, the switching functions being carried out by devices of module MO1, and at the same time measuring the temperatures T2 of at least one of the devices of module 1 (for example the temperature $T_{S21}$), and the temperature of the cooling fluid $T_{CF}$, and then calculating R= (T2-$T_{HS}$)/( $T_{HS}$ -$T_{CF}$) to compare the thermal resistance of the module MO1 and its connecting layer 41 with that between the heat sink contact surface and the cooling fluid.

The same measurements are done keeping all switches of the power module MO1 open, the switching functions being carried out by devices of module MO2 to compare the thermal resistance of the module MO2 and its connecting layer 42 with that between the heat sink contact surface and the cooling fluid.

Thus, in this configuration, it is possible to monitor a degradation of the material of the connecting layers 41, 42, in case the measurement is done repeatedly during the life of the power electronic system. Alternatively, it is possible to monitor a degradation of the mechanical contact between the module MO1 and the heat sink contact surface, for a reduction of the contact pressure due to an unfastening of the fixture system, or due to a degradation of the thermal interface material 81, such as for example, thermal paste pump out.

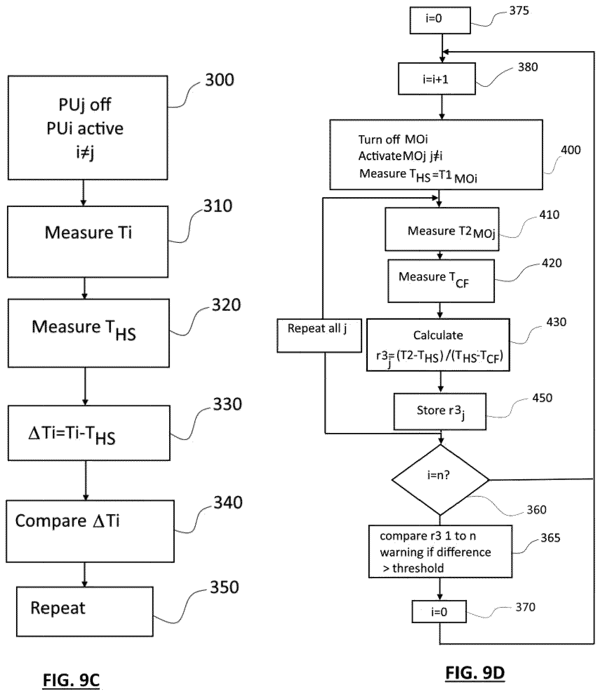

Figure 9D provides a generalized flowchart where after an initialization phase at steps 375, 380 measurements are repeated where MOi modules are turned off, MOj modules are turned off and j≠i and $T_{HS}$ is measured at step 400, T2 of modules MOj is measured at step 410, $T_{CF}$ where layer CF is the baseplate is measured at step 420, the ratio r3=(T2-$T_{HS}$)/($T_{HS}$-$T_{CF}$) is measured at step 430,the ratio r3 of module is stored at step 450 and the test is repeated until all j modules are tested to compare at step 365 the ratios r3 values in order to detect a difference in such ratios.

The material of the connecting layers 41, 42 can be a thermal conductive paste, a carbon-based foil, or any material placed in between the power modules and the heat sink contact surface.

By combining measurements at the die level, the power unit level and the module level, it is possible to monitor the die to DBC thermal resistance, the DBC to baseplate thermal resistance and the baseplate to heatsink thermal resistance.

The measurements benefit to be done in a steady state operation of the power electronic system and in order to detect such a steady state operation and then monitor a thermal resistance ratio the process may comprise:

- periodically recording at a time interval $t_{sampling}$ the temperatures Tj of at least one semiconductor device j of the power electronic system such as a power converter and storing the data in a memory;

- periodically calculating a temperature $T_{mean,j}$ and a standard deviation $\sigma_{mean,j}$ of at least the semiconductor j at a time interval $t_{eval}$ using a data sample Tnj.....Tmj, such as an integration time $t_{averaging}$ is at least a significant portion of the thermal constant of the power converter;
- at least if the conditions $T_{mean,j} > C1 \times T_{HS}$, and $\sigma_{mean,j} < C2 \times (T_{mean,j} - T_{HS})$ are respected, doing the measurement process.

C1 is for example a constant larger than 1, such as a significant temperature difference exists between the heatsink and the semiconductor die of the power converter, and such as an acceptable accuracy of the measurements can be reached. For example, if $T_{HS}=30\circ$C, having C1=3, permits to have the measurements applied only if Tmean,j> 90°C, ensuring that sufficient thermal gradients exits in the power converter. Alternatively, C1 may have different values such as C1=1.1, or preferably C1=2, or preferably C1=5.

The condition amean,j < C2*(Tmean,j-$T_{HS}$) is the condition detecting the steady state nature of the operation, by comparing the standard deviation of the temperature samples with the average temperature difference between the semiconductor and the heat sink during the sampling time. C2 is a constant that is preferably minimized, and limited by the measurement error for Tmean,j-$T_{HS}$. For example, C2=0.2, preferably C2=0.1, preferably C2=0.05.

During near thermal steady state operation of the power converter, the ratio (T1- $T_{HS}$)/ (T2- T1) is the ratio between:

- the thermal resistance between the layer Mj the connecting layer at the temperature T1 of the off state element, and the cooling means, that is temperature $T_{CM}$ equals to $T_{HS}$ or $T_{CF}$ and
- the thermal resistance between the active semiconductor (temperature T2) and the layer Mj (temperature T1),

without errors introduced by delays in obtaining a thermal equilibrium so that the measurements can be done online without significantly affecting the converter performance or interrupting its operation.

The advantage of the steady state detection is that it is thus not needed to force the converter to apply an electrical steady state condition in order to achieve a thermal steady state condition. In this method, a thermal steady state condition is detected during the normal operation of the converter, and when detected, the measurement method is processed.

The time interval $t_{sampling}$ may be a multiple of the inverse of the switching frequency of a power converter: $t_{sampling} = n/ f_{PWM}$. For example, n=100, preferably n=10. For example, $f_{PWM}$=10kHz, and $t_{sampling}$ is 10$\mu$s, preferably 1$\mu$s. In another example, n is the number of active semiconductors dies of the converter, and the temperature of each die is measured one after the other at every switching period.

In another example, the temperature $T_{mean,j}$ may be calculated using the arithmetic mean, the median of the data sample Tnj...Tjm. The definition of the standard deviation is any definition of the standard deviation commonly accepted in the field of statistical analysis.

The time interval $t_{averaging}$ is a time sufficiently long such compared to the thermal constant of the power converter or the area to be investigated. It may be chosen a priori by performing thermal impedance measurements and measuring the time at which a quasi-steady state thermal state is reached and taking for a safety margin to consider a possible thermal resistance degradation. For example, with a thermal constant of the power converter of 3 minutes, $t_{averaging}$ may be 1 minute for layers close to the die and for which the time to reach a quasi-steady state is faster than the thermal constant of the power converter, and around 3 minutes or even 9 minutes for the complete converter measurements. In another example, the thermal constant of the power converter being 30 seconds, $t_{averaging}$ may be between 15 s and 30 s for internal layers up to 270 s for the complete converter.

The time interval $t_{eval}$ is, for example a time interval larger than $t_{averaging}$, for example $t_{eval} = t_{averaging}$, or $t_{eval}$=1.5* $t_{averaging}$, or $t_{eval}$=10* $t_{averaging}$.

In the designs where the switches of powers units PU can be controlled independently from each other, in addition to measure the thermal impedance between a power unit and a heatsink, the coupling impedance between a power unit PUi and a power unit PUj (i≠j) may be measured by a sequence shown in figure 9C comprising:

1/switching off all PUj, and maintaining PUi active at step 300,

2/ measuring the temperature Ti of all PUi at step 310,

3/ measuring the temperature of the heatsink $T_{HS}$ at step 320,

4/ calculating the temperature differences $\Delta Ti = Ti - T_{HS}$ at step 330,

5/ comparing the $\Delta Ti$ between power units such as to detect a change in a coupling thermal resistance at step 340.

Optionally, the power dissipated in PU1 may be estimated.

This sequence may also be repeated according to step 350 several times during the life of the product and may also be applied successively to several of all PUi of the PS.

Thus, advantageously, a change of thermal impedance of PUi, and/or of coupling terms with PUj (i≠j) can be measured.

When the measurement sequence is applied to all PUi successively, and the power dissipated Pi in the PUi is measured or estimated, and a thermal steady state is obtained before starting the sequence, a data representation consists in arranging the temperature measurements in n matrices n x n:

When power is dissipated only in PU1:

$$\begin{bmatrix} \Delta T_1 \\ \cdots \\ \cdots \\ \Delta T_n \end{bmatrix} = \begin{bmatrix} R_{11} \cdots & R_{1i} \cdots & R_{1n} \\ \vdots & \ddots & \vdots \\ R_{n1} \cdots & R_{ni} \cdots & R_{nn} \end{bmatrix} \begin{bmatrix} P_1 \\ 0 \\ \cdots \\ 0 \end{bmatrix} => \text{M1} = \begin{bmatrix} R_{11} \cdots & 0 \cdots & 0 \\ \vdots & \ddots & \vdots \\ R_{n1} \cdots & 0 \cdots & 0 \end{bmatrix}$$

When power is dissipated only in PUi:

$$\begin{bmatrix} \Delta T_1 \\ \cdots \\ \cdots \\ \Delta T_n \end{bmatrix} = \begin{bmatrix} R_{11} \cdots & R_{1i} \cdots & R_{1n} \\ \vdots & \ddots & \vdots \\ R_{n1} \cdots & R_{ni} \cdots & R_{nn} \end{bmatrix} \begin{bmatrix} 0 \\ \cdots \\ P_i \\ \cdots \\ 0 \end{bmatrix} => \text{Mi} = \begin{bmatrix} 0 & \cdots R_{1i} \cdots & 0 \\ \vdots & \ddots & \vdots \\ 0 & \cdots R_{ni} \cdots & 0 \end{bmatrix}$$

Thus, by application of the principle of superposition and summing the matrices Mi as:

$$M = \sum \text{Mi} = \begin{bmatrix} R_{11} & R_{1i} & R_{1n} \\ \vdots & \ddots & \vdots \\ R_{n1} & R_{ni} & R_{nn} \end{bmatrix}$$

A thermal resistance matrix, including the coupling terms (non-diagonal terms) is generated. Thus, be applying this method at several times during the life of the product, it is possible to monitor a change in the thermal resistance $R_{ii}$ or of a coupling resistance $R_{ij}$ (i≠j).

An example to measure the power dissipated in the PUi of a converter is to use an electrical model Pi(IL,Vbus,fPWM, Ti , α...) of the PU, where IL is the measured load power, Ti is the measured temperature of PUi, Vbus is the known or measured bus voltage of the PUi or of the converter, fPWM is the switching frequency, and α is the duty cycle.

Alternatively, without measuring the dissipated power, the ratio between the thermal resistance of PU1 and the coupling resistance with PUi is measured, arranging the temperature measurements ΔTi in a vector gives:

$$\begin{bmatrix} \Delta T_1 \\ \cdots \\ \cdots \\ \Delta T_n \end{bmatrix}$$

By normalizing the temperatures $\Delta T_i$ with respect to $\Delta T_1$, a state vector D is obtained which represents the state of thermal resistance coupling between the PUi at instant t of the measurement:

$$D(t) = \begin{bmatrix} 1 \\ \cdots \\ \dfrac{\Delta T_i}{\Delta T_1} \\ \cdots \\ \dfrac{\Delta T_i}{\Delta T_n} \end{bmatrix}$$

By repeating the measurement at several times and comparing the vectors D(t), it is possible to detect a change in coupling resistance between the PUi.

The method of the present disclosure may thus provide a simple way to measure temperature parameters in a power electronic system where a semiconductor switch may be used in an off state to measure a temperature of a connection layer between such semiconductor switch and a heat source or such semiconductor switch and other semiconductor switches in operation. This method permits to measure contact degradation between dies and a common connecting layer when knowing the temperature of a last temperature dissipating layer under opposite to the die with respect to such connecting layer. This method targets power electronic converters where the individual semiconductor devices are driven independently, such that the temperature can be measured sequentially on each semiconductor with a gate that can be controlled independently and where several dies share a thermal connection though a layer Mj. This is typically the case in a multichip configuration where several semiconductors are electrically connected in parallel to perform the function of a single switch and to share the electrical current.

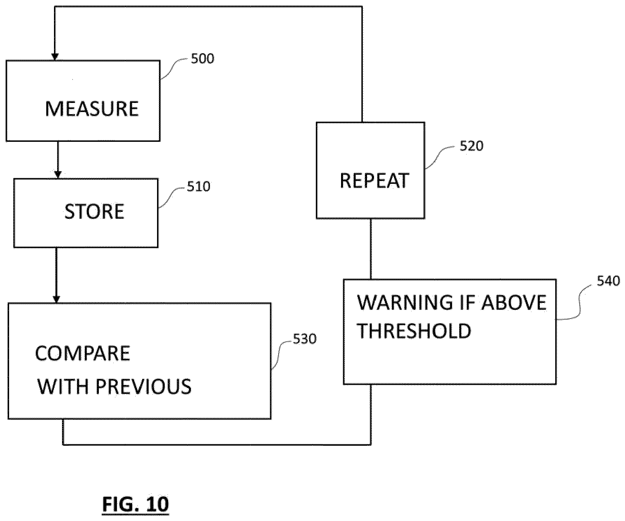

Figure 10 provides a general flowchart of a on-line measurement method which provides measurements 500 along the life of the system, storage 510, comparison with previous measurements 530, provision of a warning 540 when a value such as thermal resistance or thermal resistance ratio is above a threshold and repetition 520 of the measurement after a determined time delay.

Such method allows to measure temperature of individual switches devices in multichip power modules having different configuration in order to estimate the thermal resistance of layers between one cold device and one hot device. A change of the thermal resistance due to ageing of the power module will be correlated with a degradation of the layer.

The disclosed method may particularly be used in DC/DC power converters, AC/AC power converters and DC/AC power inverters, comprising parallel current conducting switches with switches with separate gate inputs such as converters used in wind power systems, photovoltaic inverters, electric vehicles and traction applications.

**Claims**

1. - Method for measuring temperatures or comparing thermal resistances in a power electronic system comprising at least a first power unit (S1, PU1, MO1) and a heat source thermally connected through a connection layer (Mj, BP, HS) to a cooling means (5, 7), the method comprising, while said first power unit is in an open state such as it does not dissipate heat (100), providing a limited current in said first power unit,

   said limited current being unable to turn said first power unit in a power conducting state, measuring a temperature T1 of said first power unit using a thermal sensitive electrical parameter TSEP of said first power unit, calculating a temperature $T_{CL}$ of the connection layer as being equal to such first temperature T1 since said first power unit (S1, PU1, MO1) in an open state does not generate heat (110).

2. - Method according to claim 1 wherein said heat source is a second power unit (S2, PU2, MO2).

3. - Method according to claim 2 and comprising further measuring a temperature $T_{CM}$ of the cooling means (5, 7) and calculating the difference of temperature T1-$T_{CM}$ (120) between said connection layer and said cooling means (5, 7).

4. - Method according to claim 3 comprising further:

   - measuring a temperature T2 of said second power unit (S2, PU2, MO2) using a TSEP of said second electronic unit,
   - comparing the difference T1-$T_{CM}$ with the difference T2-$T_{CM}$ (130),

   comparing the thermal resistance $R_{2\text{-}CL}$ between the second power unit and the connection layer to the thermal resistance $R_{CL\text{-}CM}$ between the connection layer and the cooling means through the calculations:
   $R_{2\text{-}CL} / R_{CL\text{-}CM} = (T_{CL} - T_{CM}) / (T2 - T_{CL}) = (T1 - T_{CM}) / (T2 - T1)$ since T1=$T_{CL}$ (140) such calculation being independent of Q, where Q is the heat flow value applied between said second power unit and said connection layer (Mj, BP, HS).

5. - Method according to claim 4 wherein said first power unit and said second power units are semiconductor switches thermally connected to said connection layer (Mj) through a first stack of material layers (M1, ..., Mj-1),wherein said cooling means is a heatsink (HS, 5) and wherein said connection layer is thermally connected to said heatsink through a second stack of material layers Mj+1, ... Mn.

6. - Method according to claim 5 wherein said first power unit and said second power units are semiconductor switches (S1, S2), said connection layer being a ceramic layer such as a direct bonded copper ceramic layer or an active metal brazed layer attached directly to said heatsink or attached to said heatsink through a baseplate BP (4').

**7.** - Method according to claim 4 wherein said first power unit is a first half bridge power unit (PU1) comprising a first top switch (S11) and a first bottom switch (S12), said first top switch and said first bottom switch having dies (1a, 2a) attached to a first ceramic layer such as a direct bonded copper ceramic layer or an active metal brazed layer DBC1 (3a) through a first die attach layer and said second electronic unit is a second half bridge power unit (PU2) comprising a second top switch (S21) and a second bottom switch (S22), said top switch and bottom switch having dies (1b, 2b) attached to a second direct bonded copper ceramic layer DBC2 (3b) through a second die attach layer and wherein said first direct bonded copper ceramic layer DBC1 (3a) and second direct bonded copper ceramic layer DBC2 (3b) are attached to a common heatsink HS (5) through a solder layer (3') and a baseplate layer BP (4'), said method comprising (200) turning off both the first top switch (S11) and the first bottom switch (S12) of the first half bridge power unit (PU1) while the second top switch (S21) and the second bottom switch (S22) of the second half bridge power unit (PU2) are active and

- measuring (210) a temperature T2 of the second top switch through TSEP of said second top switch, measuring (220) a temperature T1 of the first top switch or the first bottom switch through TSEP of said first top switch or said first bottom switch by providing a limited current in said first top switch or said first bottom switch, said limited current being unable to turn said first top switch unit in a power conducting state, considering the temperature of the baseplate as equal to said temperature T1 calculating (230) the temperature difference between said second top switch and the baseplate $R_{2-BP}=T2-T_{BP}=T2-T1$
- measuring a temperature of the heatsink $T_{HS}$ and then calculating a ratio r2= $(T2-T_{BP})/(T_{BP}-T_{HS})$ (240) to compare the thermal resistance of the second die attach layer, the second DBC layer, the solder layer with that between the baseplate and the heat sink.

**8.** - Method according to any one of claim 4 to 7 wherein each power unit is turned off in sequence (300) while the other power unit is active.

**9.** - Method according to claim 7 wherein said power electronic system comprises more than one half bridge power units (PU1, PU2) and wherein one of said half bridges is turned off (300) to provide a temperature measurement of the baseplate while measurements of thermal resistance and thermal resistance ratios are conducted on the others of said half bridges, each of said half bridges being turned off in sequence (360, 370, 380, 300) while the others are active to provide a complete testing (310, 320, 330, 340, 350) of the half bridges of the power electronic system.

**10.** - Method according to claim 4 wherein the power electronic system comprises a first power module (MO1) having a first pair of half bridges power units (PU1, PU2) each having a top switch (S11, S21) an a bottom switch (S12, S22) and a DBC layer (3a, 3b) connected to a first baseplate (41) and comprises a second power module (MO2) having a second pair of half bridge power units (PU3, PU4) each having a top switch (S31, S41) an a bottom switch (S32, S42) and a DBC layer (3c, 3d) connected to a second baseplate (42), said first baseplate and said second baseplate being attached through a thermal contact material (82) to a heatsink HS (5) in contact with a cooling fluid CF (7), the power electronic system comprising further gate driver circuitries (61a, 61b, 61c, 61d, 62a, 62b, 62c, 62d) independent for each of said switches, said method comprising measuring the thermal resistance $R_{PUI-HS}$ between a top switch (S21, S22, S31, S41) or a bottom switch (S12, S22, S32, S42) of a first power module (MO1, MO2) and the heatsink and the thermal resistance $R_{HS-CF}$ between the heatsink and the cooling fluid and comparing said thermal resistances through the steps of:

- maintaining all the devices of a second power module (MO2, MO1) open (400) and measuring the temperature $T_{HS}$ of the heatsink contact surface using a TSEP temperature measurements of one or a combination of the switches of said second power module, while the switching functions of the power electronic system are carried out by the switches of the first power module (M01), and at the same time measuring (410) the temperatures T2 of at least one of the devices of said first power module through its TSEP, measuring (420) a temperature $T_{CF}$ of the cooling fluid, and,
- calculating (430) a ratio r3= $(T2-T_{HS})/(T_{HS}-T_{CF})$ to compare the thermal resistance of the first power module, first baseplate, first thermal contact material with the thermal resistance between the heat sink contact surface and the cooling fluid, said method comprising further carrying the same steps with the switches of the first power module open while the switching functions of the power electronic system are carried out by the switches of the second power module.

**11.** - Method according to any one of the preceding claims wherein said first power unit is forced in said open state during the measurements of temperature or thermal resistances.

**12.** - Method for monitoring the thermal resistance of power units of a power electronic system comprising acquiring initial thermal resistances (500) of such power units through the method of any one of claims 4 to 11, storing (510) said initial thermal resistances and a ratio between an initial thermal resistance between said power units and the connection layer of such power units to the thermal resistance between the connection layer and the cooling means, repeating (520) said method during the life of the power electronic system to acquire further thermal resistances and further ratios, comparing (530) said further thermal resistances and said further ratios to said initial thermal resistances and said initial ratios to detect a modification of thermal resistances and ratios.

**13.** - Method according to claim 12 comprising comparing a modification of said thermal resistance to a predefined threshold value and raising a warning in case of a value of said thermal resistances or said ratios above said threshold value.

**14.** - Method according to any one of the preceding claims comprising:

- periodically recording at a time interval t , sampling a temperature Tj of at least one semiconductor device j of the power electronic system and storing said temperature Tj in a memory;
- periodically calculating a mean temperature $T_{mean,j}$ and a standard deviation $G_{mean,j}$ for at least said semiconductor device j at a time interval $t_{eval}$ using a data sample Tnj Tmj, with an integration time $t_{averaging}$ of at least half of the thermal constant of the power converter;

- at least if the conditions $T_{mean,j} > G_{mean,j}$ CI x $t_{HS}$, and < C2 x $(T_{mean,j}-T_{HS})$, where C1 is a constant larger than 1 and C2 a constant smaller than 1, are respected, doing the measurement process according to any one of claims 4 to 10.

**15.** - Method according to claim 14 where CI is a constant in a range between 1.1 and 5.

**16.** - Method according to claim 14 or 15 where C2 is a constant between 0.2 and 0.05, the condition $\sigma_{mean,j} < C2*(T_{mean,j}-T_{HS})$ being a condition detecting the steady state nature of the operation by comparing a standard deviation of the temperature samples with an average temperature difference between the semiconductor and the heat sink during the sampling time.

**17.** - Method according to claim 14, 15 or 16 where the time interval $t_{sampling}$ is a multiple of the inverse of the switching frequency of a power converter: $t_{sampling}= n/ f_{PWM}$.

**18.** - Method according to any one of claim 14 to 17 where the temperature $T_{mean,j}$ is calculated using an arithmetic mean, or a median of the data sample Tnj...Tjm.

**19.** - Method according to any one of claim 14 to 18 where the integration time $t_{averaging}$ is greater than a thermal constant of the power electronic system.

**20.** - Method according to any one of claim 14 to 19 where the time interval t is a time interval larger than $t_{averaging}$.

**21.** - Method according to any one of claims 7, 9 or 10 wherein the switches of powers units PUx, x=1 to n, where n is the total number of switches, are controlled independently from each other, wherein
the method further comprises measuring the coupling impedance between a power unit PUi and a power unit Puj by a sequence comprising:

1/ switching off all switches of modules PUj, and maintaining the switches of modules PUi active,
2/ measuring the temperature Tx of all modules PUx,
3/ measuring the temperature of the heatsink $T_{HS}$,
4/ calculating the temperature differences $\Delta Tx=Tx-T_{HS}$,
5/ comparing the $\Delta Ti$ with $\Delta Tx$ such as to detect a change in a coupling thermal resistance between modules.

**22.** - Method according to claim 21 wherein said sequence is repeated several times during the life of the product.

**23.** - Method according to claim 21 or 22 comprising measuring the power dissipated in the power unit PUi using an electrical model Pi(IL,$V_{bus}$, $f_{PWM}$, Ti , $\alpha$...) of such power unit, where IL is the measured load power, Ti is the measured temperature of PUi, Vbus is the known or measured bus voltage of the power unit PUi, $f_{PWM}$ is the switching frequency of such power unit, and $\alpha$ is the duty cycle of such power unit, and calculating coupling resistances as $\Delta Tk/Pi$.

**24.** - Software comprising instructions for implementing the method of any one of the preceding claims on the power electronic system defined in claim 1, when the method is executed in a controller of said power electronic system.

**25.** - Computer readable non-volatile medium on which the software of claim 24 is recorded.

**Patentansprüche**

**1.** Verfahren zum Messen von Temperaturen oder zum Vergleichen thermischer Widerstände in einem Leistung-Elektroniksystem, welches wenigstens eine erste Leistungseinheit (S1, PU1, MO1) und eine Wärmequelle umfasst, welche thermisch durch eine Verbindungsschicht (Mj, BP, HS) mit einem Kühlmittel (5, 7) verbunden sind, wobei das Verfahren, während die erste Leistungseinheit in einem geöffneten Zustand ist, sodass sie keine Wärme (100) abführt, ein Bereitstellen eines begrenzten Stroms in der ersten Leistungseinheit, wobei der begrenzte Strom nicht dazu in der Lage ist, die erste Leistungseinheit in einen leistungsleitenden Zustand zu versetzen, ein Messen einer Temperatur T1 der ersten Leistungseinheit unter Verwendung eines thermisch sensitiven elektrischen Parameters TSEP der ersten Leistungseinheit, und ein Berechnen einer Temperatur $T_{CL}$ der Verbindungsschicht umfasst, sodass diese gleich wie die erste Temperatur T1 ist, da die erste Leistungseinheit (S1, PU1, MO1) in einem offenen Zustand keine Wärme (110) erzeugt.

**2.** Verfahren nach Anspruch 1, wobei die Wärmequelle eine zweiter Leistungseinheit (S2, PU2, MO2) ist.

**3.** Verfahren nach Anspruch 2 und ferner umfassend ein Messen einer Temperatur $T_{CM}$ der Kühlmittel (5, 7) und ein Berechnen der Temperaturdifferenz T1-$T_{CM}$ (120) zwischen der Verbindungsschicht und dem Kühlmittel (5, 7).

**4.** Verfahren nach Anspruch 3, ferner umfassend:

- Messen einer Temperatur T2 der zweiten (S2, PU2, MO2) Leistungseinheit (S2, PU2, MO2) unter Verwendung eines TSEP der zweiten elektronischen Einheit,
- Vergleichen der Differenz T1-$T_{CM}$ mit der Differenz T2-$T_{CM}$ (130),
- Vergleichen des thermischen Widerstands $R_{2-CL}$ zwischen der zweiten Leistungseinheit und der Verbindungsschicht mit dem thermischen Widerstand $R_{CL-CM}$ zwischen der Verbindungsschicht und dem Kühlmittel durch die Berechnungen:
$R_{2-CL} / R_{CL-CM} = (T_{CL} - T_{CM}) / (T2 - T_{CL}) = (T1 - T_{CM}) / (T2 - T1)$, da $T1 = T_{CL}$ (140) ist, sind derartige Berechnungen unabhängig von Q, wobei Q der Wärmeflusswert ist, welcher zwischen der zweiten Leistungseinheit und der Verbindungsschicht (Mj, BP, HS) angelegt ist.

**5.** Verfahren nach Anspruch 4, wobei die erste Leistungseinheit und die zweite Leistungseinheit Halbleiterschalter sind, welche durch einen ersten Stapel von Materialschichten (M1, ..., Mj-1) thermisch mit der Verbindungsschicht (Mj) verbunden sind, wobei das Kühlmittel ein Kühlkörper (HS, 5) ist und wobei der Verbindungschicht durch einen zweiten Stapel von Materialschichten (Mj+1, ... Mn) mit dem Kühlkörper verbunden ist.

**6.** Verfahren nach Anspruch 5, wobei die erste Leistungseinheit und die zweite Leistungseinheit Halbleiterschalter (S1, S2) sind, die Verbindungsschicht eine Keramikschicht ist, beispielsweise eine direktgebundene Kupfer-Keramikschicht oder eine hartgelötete Aktivmetallschicht, welche direkt an dem Kühlkörper befestigt ist oder durch eine Basisplatte BP (4') an dem Kühlkörper befestigt ist.

**7.** Verfahren nach Anspruch 4, wobei die erste Leistungseinheit eine erste Halbbrücken-Leistungseinheit (PU1) ist, welche einen ersten oberen Schalter (S11) und einen ersten unteren Schalter (S12) umfasst, wobei der erste obere Schalter und der erste untere Schalter Plättchen (1a, 2a) aufweisen, welche durch eine erste Plättchen-Befestigungsschicht an einer ersten Keramikschicht befestigt sind, beispielsweise einer direktgebundenen Kupfer-Keramikschicht oder einer hartgelöteten Aktivmetallschicht DBC1 (3a), und wobei die zweite Leistungseinheit eine zweite Halbbrücken-Leistungseinheit (PU2) ist, welche einen zweiten oberen Schalter (S21) und einen zweiten unteren Schalter (S22) umfasst, wobei der obere Schalter und der untere Schalter Plättchen (1b, 2b) aufweisen, welche durch eine zweite Plättchen-Befestigungsschicht an einer zweiten direktgebundenen Kupfer-Keramikschicht DBC2 (3b) befestigt sind, und wobei die erste direktgebundene Kupfer-Keramikschicht DBC1 (3a) und die zweite direktgebundene Kupfer-Keramikschicht DBC2 (3b) durch eine Lötschicht (3') und eine Basisplattenschicht (4') an einem gemeinsamen Kühlkörper (5) befestigt sind, wobei das Verfahren ein Ausschalten sowohl des ersten oberen Schalters (S11) als auch des ersten unteren Schalters (S12) der ersten Halbbrücken-Leistungseinheit (PU1) umfasst (200), während der zweite obere Schalter (S21) und der zweite untere Schalter (S22) der zweiten Halbbrücken-Leistungseinheit (PU1) aktiv sind,

und

- Messen (210) einer Temperatur T2 des zweiten oberen Schalters durch TSEP des zweiten oberen Schalters, Messen (220) einer Temperatur T1 des ersten oberen Schalters oder des ersten unteren Schalters durch TSEP des ersten oberen Schalters oder des ersten unteren Schalters durch Bereitstellen eines begrenzten Stroms in dem ersten oberen Schalter oder in dem ersten unteren Schalter, wobei der begrenzte Strom nicht dazu in der Lage ist, den ersten oberen Schalter in einen leistungsleitenden Zustand zu versetzen, wobei die Temperatur der Basisplatte als gleich wie die Temperatur T1 berücksichtigt wird, Berechnen (230) der Temperaturdifferenz zwischen dem zweiten oberen Schalter und der Basisplatte $R_{2\text{-}BP}$ = T2 - $T_{BP}$ = T2 - T1,
- Messen einer Temperatur des Kühlkörpers $T_{HS}$ and daraufhin Berechnen eines Verhältnisses r2 = (T2 - $T_{BP}$) / ($T_{BP}$ - $T_{HS}$) (240), um den thermischen Widerstand der zweiten Plättchen-Befestigungsschicht, der zweiten DBC-Schicht, der Lötschicht mit der zwischen der Basisplatte und dem Kühlkörper.

8.  Verfahren nach einem der Ansprüche 4 bis 7, wobei jede Leistungseinheit in Sequenz (300) abgeschaltet wird, während die andere Leistungseinheit aktiv ist.

9.  Verfahren nach Anspruch 7, wobei das Leistung-Elektroniksystem mehr als eine Halbbrücken-Leistungseinheit (PU1, PU2) umfasst und wobei eine der Halbbrücken ausgeschaltet wird (300), um eine Temperaturmessung der Basisplatte bereitzustellen, während Messungen der thermischen Widerstände und Verhältnisse thermischer Widerstände an den anderen der Halbbrücken durchgeführt werden, wobei jede der Halbbrücken in Sequenz ausgeschaltet wird (360, 370, 380, 300), während die anderen aktiv sind, um eine vollständige Prüfung (310, 320, 330, 340, 350) der Halbbrücken des Leistung-Elektroniksystems bereitzustellen.

10. Verfahren nach Anspruch 4, wobei das Leistung-Elektroniksystem ein erstes Leistungsmodul (MO1) umfasst, welches ein erstes Paar von Halbbrücken-Leistungseinheiten (PU1, PU2), welche jeweils einen oberen Schalter (S11, S21) und einen unteren Schalter (S12, S22) aufweisen, und eine DBC-Schicht (3a, 3b) aufweist, welche mit einer ersten Basisplatte (41) verbunden ist, und ein zweites Leistungsmodul (MO2) umfasst, welches ein zweites Paar von Halbbrücken-Leistungseinheiten (PU3, PU4), welche jeweils einen oberen Schalter (S31, S41) und einen unteren Schalter (S32, S42) aufweisen, und eine DBC-Schicht (3c, 3d) aufweist, welche mit einer zweiten Basisplatte (42) verbunden ist, wobei die erste Basisplatte und die zweite Basisplatte durch ein thermisches Kontaktmaterial (82) an einem Kühlkörper HS (5) befestigt sind, welcher in Kontakt mit einem Kühlfluid CF (7) ist, wobei das Leistung-Elektroniksystem ferner Gate-Treiber-Schaltungen (61a, 61b, 61c, 61d, 62b, 62c, 62d) umfasst, welche für jeden der Schalter unabhängig sind, wobei das Verfahren ein Messen des thermischen Widerstands $R_{PU1\text{-}HS}$ zwischen einem oberen Schalter (S21, S22, S31, S41) oder einem unteren Schalter (S12, S22, S32, S42) eines ersten Leistungsmoduls (MO1, MO2) und dem Kühlkörper sowie des thermischen Widerstands $R_{HS\text{-}CF}$ zwischen dem Kühlkörper und dem Kühlfluid sowie ein Vergleichen der thermischen Widerstände durch die folgenden Schritte umfasst:

- Beibehalten aller Vorrichtungen eines zweiten Leistungsmoduls (MO2, MO1) in einem geöffneten Zustand (400) und Messen der Temperatur $T_{HS}$ der Kühlkörper-Kontaktfläche unter Verwendung von TSEP-Temperaturmessungen vom einem oder einer Kombination der Schalter des zweiten Leistungsmoduls, während die Schaltfunktionen des Leistung-Elektroniksystems durch die Schalter des ersten Leistungsmoduls (MO1) ausgeführt werden, und zeitgleiches Messen (410) der Temperaturen T2 wenigstens einer der Vorrichtungen des ersten Leistungsmoduls durch dessen TSEP, Messen (420) einer Temperatur $T_{CF}$ des Kühlfluids, und
- Berechnen (430) eines Verhältnisses r3 = (T2 - $T_{HS}$) / ($T_{HS}$ - $T_{CF}$), um den thermischen Widerstand des ersten Leistungsmoduls, der ersten Basisplatte, des ersten thermischen Kontaktmaterials mit dem thermischen Widerstand zwischen der Kühlkörper-Kontaktfläche und dem Kühlfluid zu vergleichen, wobei das Verfahren ferner ein Ausführen der gleichen Schritte mit den geöffneten Schaltern des ersten Leistungsmoduls umfasst, während die Schaltfunktionen des Leistung-Elektroniksystems durch die Schalter des zweiten Leistungsmoduls ausgeführt werden.

11. Verfahren nach einem der vorhergehenden Ansprüche, wobei die erste Leistungseinheit während den Messungen von Temperatur oder thermischer Widerstände in den offenen Zustand gezwungen wird.

12. Verfahren zum Überwachen des thermischen Widerstands von Leistungseinheiten eines Leistung-Elektroniksystems, umfassend ein Erlangen initialer thermischer Widerstände (500) solcher Leistungseinheiten durch das Verfahren nach einem der Ansprüche 4 bis 11, ein Speichern (510) der initialen thermischen Widerstände und eines Verhältnisses zwischen einem initialen thermischen Widerstand zwischen den Leistungseinheiten und der Verbindungsschicht solcher Leistungseinheiten zu dem thermischen Widerstand zwischen der Verbindungsschicht und dem Kühlmittel, ein Wiederholen (520) des Verfahrens während der Lebensdauer des Leistung-Elektroniksystems, um weitere thermische Widerstände und weitere Verhältnisse zu erhalten, ein Vergleichen (530) der weiteren thermischen Widerstände und der weiteren Verhältnisse mit den initialen thermischen Widerständen und den initialen Verhältnissen, um eine Modifizierung von thermischen Widerständen und Verhältnissen zu detektieren.

13. Verfahren nach Anspruch 12, umfassend ein Vergleichen einer Modifizierung des thermischen Widerstands mit einem vordefinierten Schwellenwert und ein Verursachen einer Warnung, falls ein Wert der thermischen Widerstände oder der Verhältnisse über dem Schwellenwert ist.

14. Verfahren nach einem der vorhergehenden Ansprüche, umfassend:

- periodisches Aufnehmen einer Temperatur Tj wenigstens einer Halbleitervorrichtung j des Leistung-Elektroniksystems an einem Zeitintervall $t_{sampling}$ und Speichern der Temperatur Tj in einem Speicher;
- periodisches Berechnen einer Durchschnittstemperatur $T_{mean,j}$ und einer Standardabweichung $\sigma_{mean,j}$ für wenigstens die Halbleitervorrichtung j an einem Zeitintervall $t_{eval}$ unter Verwendung einer Datenprobe Tnj.....Tmj, mit einer Integrationszeit $t_{averaging}$ von wenigstens der Hälfte der thermischen Konstante des Leistungsumwandlers;
- wenigstens wenn die Bedingungen $T_{mean,j} > C1 \times T_{HS}$, und $\sigma_{mean,j} < C2 \times (T_{mean,j} - T_{HS})$ beachtet werden, wobei C1 eine Konstante größer als 1 und C2 eine Konstante kleiner als 1 ist, Durchführen des Messvorgangs gemäß einem der Ansprüche 4 bis 10.

15. Verfahren nach Anspruch 14, wobei C1 eine Konstante in einem Bereich zwischen 1,1 und 5 ist.

16. Verfahren nach Anspruch 14 oder 15, wobei C2 eine Konstante zwischen 0,2 und 0,05 ist, wobei die Bedingung $\sigma mean,j < C2 \times (Tmean,j - T_{HS})$ eine Bedingung ist, in welcher die Steady-State-Eigenschaft des Vorgangs durch Vergleichen einer Standardabweichung der Temperaturproben mit einer durchschnittlichen Temperaturdifferenz zwischen dem Halbleiter und dem Kühlkörper während der Abtastzeit detektiert wird.

17. Verfahren nach Anspruch 14, 15 oder 16, wobei das Zeitintervall $t_{sampling}$ ein Mehrfaches des Inversen der Schaltfrequenz eines Leistungsumwandlers ist: $t_{sampling} = n / f_{PWM}$.

18. Verfahren nach einem der Ansprüche 14 bis 17, wobei die Temperatur $T_{mean,j}$ unter Verwendung eines arithmetischen Mittels oder eines Medians der Datenprobe Tnj...Tjm berechnet wird.

19. Verfahren nach einem der Ansprüche 14 bis 18, wobei die Integrationszeit $t_{averaging}$ größer als eine thermische Konstante des Leistung-Elektroniksystems ist.

20. Verfahren nach einem der Ansprüche 14 bis 19, wobei das Zeitintervall $t_{eval}$ ein Zeitintervall ist, welches größer als $t_{averaging}$ ist.

21. Verfahren nach einem der Ansprüche 7, 9 oder 10, wobei die Schalter von Leistungseinheiten PUx, x = 1 bis n, bei welchen n die Gesamtanzahl von Schaltern ist, unabhängig voneinander gesteuert werden, wobei das Verfahren ferner ein Messen der Kopplungsimpedanz zwischen einer Leistungseinheit PUi und einer Leistungseinheit PUj i ≠ j durch eine Sequenz umfasst, umfassend:

- 1/Ausschalten aller Schalter von Modulen PUj und Beibehalten der Schalter der aktiven PUi-Module,
- 2/ Messen der Temperatur Tx aller Module PUx,
- 3/ Messen der Temperatur des Kühlkörpers $T_{HS}$,
- 4/ Berechnen der Temperaturdifferenzen $\Delta Tx = Tx - T_{HS}$,
- 5/ Vergleichen der $\Delta Ti$ mit $\Delta Tx$, um eine Änderung in einer Kopplung eines thermischen Widerstandes zwischen Modulen zu detektieren.

22. Verfahren nach Anspruch 21, wobei die Sequenz während der Lebensdauer des Produkts mehrere Male wiederholt wird.

23. Verfahren nach Anspruch 21 oder 22, umfassend ein Messen der Leistung, welche in der Leistungseinheit PUi abgeführt wird, unter Verwendung eines elektrischen Models Pi(IL, Vbus, fPWM, Ti, $\alpha$...) solch einer Leistungseinheit, wobei IL die gemessene Nutzleistung ist, Ti die gemessene Temperatur von PUi ist, Vbus die bekannte oder gemessene Busspannung der Leistungseinheit PUi ist, fPWM die Schaltfrequenz einer solchen Leistungseinheit ist und $\alpha$ der Arbeitszyklus einer solchen Leistungseinheit ist, und ein Berechnen von Kopplungswiderständen als $\Delta$Tk/Pi.

24. Software, umfassend Anweisungen zum Implementieren des Verfahrens nach einem der vorhergehenden Ansprüche auf dem Leistung-Elektroniksystem, welches in Anspruch 1 definiert ist, wenn das Verfahren in einer Steuereinheit des Leistung-Elektroniksystems ausgeführt wird.

25. Computerlesbares, nicht-volatiles Medium, auf welchem die Software nach Anspruch 24 aufgenommen ist.

**Revendications**

1. Procédé pour mesurer des températures ou comparer des résistances thermiques dans un système électronique de puissance comprenant au moins une première unité de puissance (S1, PU1, MO1) et une source de chaleur reliée thermiquement par le biais d'une couche de liaison (Mj, BP, HS) à un moyen de refroidissement (5, 7), le procédé comprenant, tandis que ladite première unité de puissance est dans un état ouvert de sorte qu'elle ne dissipe pas la chaleur (100), la fourniture d'un courant limité dans ladite première unité de puissance, ledit courant limité n'étant pas capable de mettre ladite première unité de puissance dans un état conducteur de puissance, la mesure d'une température T1 de ladite première unité de puissance en utilisant un paramètre électrique thermosensible TSEP de ladite première unité de puissance, le calcul d'une température $T_{CL}$ de la couche de liaison comme étant égale à cette première température T1 puisque ladite première unité de puissance (S1, PU1, MO1) dans un état ouvert ne génère pas de chaleur (110).

2. Procédé selon la revendication 1 dans lequel ladite source de chaleur est une seconde unité de puissance (S2, PU2, MO2).

3. Procédé selon la revendication 2 et comprenant en outre la mesure d'une température $T_{CM}$ du moyen de refroidissement (5, 7) et le calcul de la différence de température T1 - $T_{CM}$ (120) entre ladite couche de liaison et ledit moyen de refroidissement (5, 7).

4. Procédé selon la revendication 3 comprenant en outre :

   - la mesure d'une température T2 de ladite seconde unité de puissance (S2, PU2, MO2) en utilisant un TSEP de ladite seconde unité électronique,
   - la comparaison de la différence T1 - $T_{CM}$ avec la différence T2 - $T_{CM}$ (130),
   - la comparaison de la résistance thermique $R_{2\text{-}CL}$ entre la seconde unité de puissance et la couche de liaison à la résistance thermique $R_{CL\text{-}CM}$ entre la couche de liaison et le moyen de refroidissement par le biais des calculs :
   $R_{2\text{-}CL}/R_{CL\text{-}CM} = (T_{CL} - T_{CM})/(T2 - T_{CL}) = (T1 - T_{CM})/(T2 - T1)$ puisque T1 = $T_{CL}$ (140) ce calcul étant indépendant de Q, où Q est la valeur de flux de chaleur appliquée entre ladite seconde unité de puissance et ladite couche de liaison (Mj, BP, HS).

5. Procédé selon la revendication 4 dans lequel ladite première unité de puissance et lesdites secondes unités de puissance sont des commutateurs à semi-conducteur reliés thermiquement à ladite couche de liaison (Mj) par le biais d'un premier empilement de couches de matériaux (M1, ..., Mj-1), dans lequel ledit moyen de refroidissement est un dissipateur thermique (HS, 5) et dans lequel ladite couche de liaison est reliée thermiquement audit dissipateur thermique par le biais d'un second empilement de couches de matériaux (Mj+1, ... Mn).

6. Procédé selon la revendication 5 dans lequel ladite première unité de puissance et lesdites secondes unités de puissance sont des commutateurs à semi-conducteur (S1, S2), ladite couche de liaison étant une couche de céramique telle qu'une couche de céramique au cuivre à collage direct ou une couche de métal actif brasée fixée directement audit dissipateur thermique ou fixée audit dissipateur thermique par le biais d'une plaque de base BP (4').

7. Procédé selon la revendication 4 dans lequel ladite première unité de puissance est une première unité de puissance en demi-pont (PU1) comprenant un premier commutateur supérieur (S 11) et un premier commutateur inférieur (S12), ledit premier commutateur supérieur et ledit premier commutateur inférieur ayant des dés (1a, 2a) fixés à une première couche de céramique telle qu'une couche de céramique au cuivre à collage direct ou une couche de métal actif brasée DBC1 (3a) par le biais d'une première couche de fixation de dés et ladite seconde unité électronique est une seconde unité de puissance en demi-pont (PU2) comprenant un second commutateur supérieur (S21) et un second commutateur inférieur (S22), ledit commutateur supérieur et ledit commutateur inférieur ayant des dés (1b, 2b) fixés à une seconde couche de céramique au cuivre à collage direct DBC2 (3b) par le biais d'une seconde couche de fixation de dés et dans lequel ladite première couche de céramique au cuivre à collage direct DBC1 (3a) et ladite seconde couche de céramique au cuivre à collage direct DBC2 (3b) sont fixées à un dissipateur thermique HS (5) commun par le biais d'une couche de métal d'apport (3') et d'une couche de plaque de base BP (4'), ledit procédé comprenant (200) l'extinction à la fois du premier commutateur supérieur (S11) et du premier commutateur inférieur (S12) de la première unité de puissance en demi-pont (PU1) tandis que le second commutateur supérieur (S21) et le second commutateur inférieur (S22) de la seconde unité de puissance en demi-pont (PU2) sont actifs et

- la mesure (210) d'une température T2 du second commutateur supérieur par le biais d'un TSEP dudit second commutateur supérieur, la mesure (220) d'une température T1 du premier commutateur supérieur ou du premier commutateur inférieur par le biais d'un TSEP dudit premier commutateur supérieur ou dudit premier commutateur inférieur en fournissant un courant limité dans ledit premier commutateur supérieur ou ledit premier commutateur inférieur, ledit courant limité n'étant pas capable de mettre ladite première unité de commutateur supérieur dans un état conducteur de puissance, en considérant la température de la plaque de base comme égale à ladite température T1 le calcul (230) de la différence de température entre ledit second commutateur supérieur et la plaque de base $R_{2\text{-}BP} = T2 - T_{BP} = T2 - T1$

- la mesure d'une température du dissipateur thermique $T_{HS}$, puis le calcul d'un rapport $r2 = (T2 - T_{BP})/(T_{BP} - T_{HS})$ (240) pour comparer la résistance thermique de la seconde couche de fixation de dés, de la seconde couche de DBC, de la couche de métal d'apport avec celle entre la plaque de base et le dissipateur thermique.

8. Procédé selon l'une quelconque des revendications 4 à 7 dans lequel chaque unité de puissance est éteinte en séquence (300) tandis que l'autre unité de puissance est active.

9. Procédé selon la revendication 7 dans lequel ledit système électronique de puissance comprend plus d'une unité de puissance en demi-pont (PU1, PU2) et dans lequel l'un desdits demi-ponts est éteint (300) pour fournir une mesure de température de la plaque de base tandis que des mesures de résistance thermique et des rapports de résistance thermique sont menés sur les autres desdits demi-ponts, et chacun desdits demi-ponts étant éteint en séquence (360, 370, 380, 300) tandis que les autres sont actifs pour fournir un test complet (310, 320, 330, 340, 350) des demi-ponts du système électronique de puissance.

10. Procédé selon la revendication 4 dans lequel le système électronique de puissance comprend un premier module de puissance (MO1) ayant une première paire d'unités de puissance en demi-pont (PU1, PU2) ayant chacune un commutateur supérieur (S11, S21), un commutateur inférieur (S12, S22) et une couche de DBC (3a, 3b) reliée à une première plaque de base (41) et comprend un second module de puissance (MO2) ayant une seconde paire d'unités de puissance en demi-pont (PU3, PU4) ayant chacune un commutateur supérieur (S31, S41) et un commutateur inférieur (S32, S42) et une couche de DBC (3c, 3d) reliée à une seconde plaque de base (42), ladite première plaque de base et ladite seconde plaque de base étant fixées par le biais d'un matériau de contact thermique (82) à un dissipateur thermique HS (5) en contact avec un fluide de refroidissement CF (7), le système électronique de puissance comprenant des ensembles de circuits d'attaque de portes supplémentaires (61a, 61b, 61c, 61d, 62a, 62b, 62c, 62d) indépendants pour chacun desdits commutateurs, ledit procédé comprenant la mesure de la résistance thermique $R_{PU1\text{-}HS}$ entre un commutateur supérieur (S21, S22, S31, S41) ou un commutateur inférieur (S12, S22, S32, S42) d'un premier module de puissance (MO1, MO2) et le dissipateur thermique et de la résistance thermique $R_{HS\text{-}CF}$ entre le dissipateur thermique et le fluide de refroidissement et la comparaison desdites résistances thermiques par le biais des étapes consistant à :

- maintenir tous les dispositifs d'un second module de puissance (MO2, MO1) ouverts (400) et mesurer la température $T_{HS}$ de la surface de contact de dissipateur thermique en utilisant des mesures de température de TSEP d'un ou d'une combinaison des commutateurs dudit second module de puissance, tandis que les fonctions de commutation du système électronique de puissance sont assurées par les commutateurs du premier module de puissance (MO1), et en même temps mesurer (410) les températures T2 d'au moins un parmi les dispositifs dudit premier module de puissance par le biais de son TSEP, mesurer (420) une température

$T_{CF}$ du fluide de refroidissement, et,

- calculer (430) un rapport r3 = (T2 - $T_{HS}$)/($T_{HS}$ - $T_{CF}$) pour comparer la résistance thermique du premier module de puissance, de la première plaque de base, du premier matériau de contact thermique avec la résistance thermique entre la surface de contact de dissipateur thermique et le fluide de refroidissement, ledit procédé comprenant en outre la réalisation des mêmes étapes avec les commutateurs du premier module de puissance ouverts tandis que les fonctions de commutation du système électronique de puissance sont assurées par les commutateurs du second module de puissance.

11. Procédé selon l'une quelconque des revendications précédentes dans lequel ladite première unité de puissance est forcée dans ledit état ouvert pendant les mesures de température ou de résistances thermiques.

12. Procédé pour surveiller la résistance thermique d'unités de puissance d'un système électronique de puissance comprenant l'acquisition de résistances thermiques initiales (500) de ces unités de puissance par le biais du procédé selon l'une quelconque des revendications 4 à 11, le stockage (510) desdites résistances thermiques initiales et d'un rapport entre une résistance thermique initiale entre lesdites unités de puissance et la couche de liaison de ces unités de puissance à la résistance thermique entre la couche de liaison et le moyen de refroidissement, la répétition (520) dudit procédé pendant la durée de vie du système électronique de puissance pour acquérir des résistances thermiques supplémentaires et des rapports supplémentaires, la comparaison (530) desdites résistances thermiques supplémentaires et desdits rapports supplémentaires auxdites résistances thermiques initiales et auxdits rapports initiaux pour détecter une modification de résistances thermiques et de rapports.

13. Procédé selon la revendication 12 comprenant la comparaison d'une modification de ladite résistance thermique à une valeur de seuil prédéfinie et le déclenchement d'un avertissement dans le cas d'une valeur desdites résistances thermiques ou desdits rapports au-dessus de ladite valeur de seuil.

14. Procédé selon l'une quelconque des revendications précédentes comprenant :

- l'enregistrement de manière périodique à un intervalle de temps $t_{sampling}$ d'une température Tj d'au moins un dispositif à semi-conducteur j du système électronique de puissance et le stockage de ladite température Tj dans une mémoire ;
- le calcul de manière périodique d'une température moyenne $T_{mean,j}$ et d'un écart standard $\sigma_{mean,j}$ pour au moins ledit dispositif à semi-conducteur j à un intervalle de temps $t_{eval}$ en utilisant un échantillon de données Tnj... Tmj, avec un temps d'intégration $t_{averaging}$ d'au moins la moitié de la constante thermique du convertisseur de puissance ;
- au moins si les conditions $T_{mean,j}$ > C1 x $T_{HS}$ et $\sigma_{mean,j}$ < C2 x ($T_{mean,j}$ - $T_{HS}$), où C1 est une constante supérieure à 1 et C2 une constante inférieure à 1, sont respectées, l'accomplissement du processus de mesure selon l'une quelconque des revendications 4 à 10.

15. Procédé selon la revendication 14 où C1 est une constante dans une plage entre 1,1 et 5.

16. Procédé selon la revendication 14 ou 15 où C2 est une constante entre 0,2 et 0,05, la condition $\sigma$mean,j < C2*(Tmean,j - $T_{HS}$) étant une condition détectant la nature de régime permanent de l'opération en comparant un écart-type des échantillons de température avec une différence de température moyenne entre le semi-conducteur et le dissipateur thermique pendant le temps d'échantillonnage.

17. Procédé selon la revendication 14, 15 ou 16 où l'intervalle de temps $t_{sampling}$ est un multiple de l'inverse de la fréquence d'échantillonnage d'un convertisseur de puissance : $t_{sampling}$ = n/$f_{PWM}$.

18. Procédé selon l'une quelconque des revendications 14 à 17 où la température $T_{mean,j}$ est calculée en utilisant une moyenne arithmétique ou une médiane de l'échantillon de données Tnj... Tjm.

19. Procédé selon l'une quelconque des revendications 14 à 18 où le temps d'intégration $t_{averaging}$ est supérieur à une constante thermique du système électronique de puissance.

20. Procédé selon l'une quelconque des revendications 14 à 19 où l'intervalle de temps $t_{eval}$ est un intervalle de temps supérieur à $t_{averaging}$.

21. Procédé selon l'une quelconque des revendications 7, 9 ou 10 dans lequel les commutateurs d'unités de puissance PUx, x = 1 à n, où n est le nombre total de commutateurs, sont commandés indépendamment les uns des autres, dans lequel le procédé comprend en outre la mesure de l'impédance de couplage entre une unité de puissance PUi et une unité de puissance PUj i ≠ j, par une séquence comprenant :

- 1/ la coupure de tous les commutateurs de modules PUj, et le maintien des commutateurs de modules PUi actifs,
- 2/ la mesure de la température Tx de tous les modules PUx,
- 3/ la mesure de la température du dissipateur thermique $T_{HS}$,
- 4/ le calcul des différences de température $\Delta Tx = Tx - T_{HS}$,
- 5/ la comparaison de la $\Delta Ti$ avec la $\Delta Tx$ de façon à détecter un changement dans une résistance thermique de couplage entre des modules.

22. Procédé selon la revendication 21 dans lequel ladite séquence est répétée plusieurs fois pendant la durée de vie du produit.

23. Procédé selon la revendication 21 ou 22 comprenant la mesure de la puissance dissipée dans l'unité de puissance PUi en utilisant un modèle électrique Pi(IL, Vbus, fPWM, Ti, $\alpha$...) de cette unité de puissance, où IL est la puissance de sortie mesurée, Ti est la température mesurée de PUi, Vbus est la tension de source connue ou mesurée de l'unité de l'unité de puissance PUi, fPWM est la fréquence d'échantillonnage de cette unité de puissance, et $\alpha$ est le cycle de service de cette unité de puissance, et le calcul des résistances de couplage en tant que $\Delta Tk/Pi$.

24. Logiciel comprenant des instructions pour mettre en oeuvre le procédé selon l'une quelconque des revendications précédentes sur le système électronique de puissance défini dans la revendication 1, lorsque le procédé est exécuté dans un dispositif de commande dudit système électronique de puissance.

25. Support non volatil lisible par ordinateur sur lequel le logiciel selon la revendication 24 est enregistré.

**FIG. 1**

**FIG. 2**

**FIG. 3**

**FIG. 4**

PU1　　　　　　　　　PU2　　　　　　　　　PU3

3a　　　　　　　　　3b　　　　　　　　　3c　　　　PS4

1a　　2a　　1b　　2b　　1c　　2c

4'

5

Baseplate BP

Heatsink HS

**FIG. 5**

61a　　S11　　61b　　S21　　61c　　S31

$V_{bus}$

S12　　　S22　　　S32

62a　　62b　　62c

**FIG. 6**

PS5

S11  3a  S12      S21  3b  S22      S31  3'a  S32      PU3      S41      S42
1a     2a       1b     2b       1'a     2'a      1'b  3'b  2'b

41                                                                      42

81                                                                      82

DBC1              DBC2             DBC3             DBC4                 5

Baseplate 1          Baseplate 2

Heatsink  HS

Cooling fluid                                                           7

PU1         PU2                    PU4

⎧‾‾‾‾‾‾‾‾‾‾‾⏜‾‾‾‾‾‾‾‾‾‾⎫  ⎧‾‾‾‾‾‾‾‾‾‾‾⏜‾‾‾‾‾‾‾‾‾‾⎫

**FIG 7**        MO1                    MO2

61a   S11      61b   S21      61'a   S31      61'b      S41

$V_{bus}$

**FIG. 8**      S12         S22         S32            S42
62a           62b          62'a        62'b

27

100

S1
open
S2
active?

No

Yes

110

inject current Gate S1
measure T1 S1
calculate temperature $T_{Mj}$

120

Measure $T_{HS}$
CalculateT1-$T_{HS}$

130

Measure T2 S2
Compare T1-$T_{HS}$ /T2-$T_{HS}$

140

Calculate

RS2,Mj / RMj,HS=(TMj,S2 - THS) / (T2 - TMj,S2)

**FIG. 9A**

Turn off S11, S12
while
S21, S22 active
S32, S32 active

200

Measure T1
Consider $T_B$ =T1

210

Measure T2
T2=$T_{PU2}$

220

Measure $T_{HS}$

225

Calculate
$R_{PU2}$ = ($T_{S21}$-$T_B$)/( $T_B$-$T_{HS}$) or
$R_{PU2}$ =($T_{S22}$-$T_B$)/($T_B$-$T_{HS}$)

230

**FIG. 9B**

28

## FIG. 9C

```
PUj off
PUi active
i≠j                  300

Measure Ti          310

Measure T_HS        320

ΔTi=Ti-T_HS         330

Compare ΔTi         340

Repeat              350
```

**FIG. 9C**

## FIG. 9D

```
i=0                          375

i=i+1                        380

Turn off MOi
Activate MOj j≠i             400
Measure T_HS=T1_MOi

Measure T2_MOj               410

Measure T_CF                 420

Repeat all j    Calculate    430
                r3_j=(T2-T_HS)/(T_HS-T_CF)

                Store r3_j   450

                i=n?         360

compare r3 1 to n
warning if difference        365
> threshold

i=0                          370
```

**FIG. 9D**

MEASURE — 500

STORE — 510

REPEAT — 520

COMPARE WITH PREVIOUS — 530

WARNING IF ABOVE THRESHOLD — 540

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103175861 A
- CN 103792476 A
- EP 0708327 B1

- US 7356441 B2
- CN 107219016 A

**Non-patent literature cited in the description**

- **N. DEGRENNE ; J. EWANCHUK ; E. DAVID ; R. BOLDYRJEW ; S. MOLLOV.** A Review of Prognostics and Health Management for Power. *Annual Conference of the Prognostics and Health Management Society,* 2015, vol. 1-11
- **MAURO CIAPPA.** Selected failure mechanisms of modern power modules. *Microelectronics Reliability,* 2002, vol. 42, 653-667

- **P-Y. PICHON ; J. BRANDELERO.** Relative importance of solder and wire bond defects on the maxi-mum junction temperature of IGBT devices. *Microelectronics Reliability,* 2021, vol. 126, 114250
- **B. TIAN et al.** Monitoring IGBT's Health Condition via Junction Temperature Variations. *2014 IEEE APPLIED POWER ELECTRONICS CONFERENCE AND EXPOSITION,* 16 March 2014, 2550-2555